# EUROPÄISCHE PATENTANMELDUNG

(11) **EP 3 792 303 A1**
(43) Veröffentlichungstag der Anmeldung: **17.03.2021**
(21) Anmeldenummer: 19196336.2
(22) Anmeldetag: 10.09.2019
(51) Int. Cl.: C08K 3/30, C08K 5/00

(54) **HOCHVOLTKOMPONENTEN**

(71) Anmelder: LANXESS Deutschland GmbH, 50569 Köln (DE)
(72) Erfinder: Die Erfindernennung liegt noch nicht vor

(57) **Zusammenfassung**

Die vorliegende Erfindung betrifft Hochvoltkomponenten, insbesondere für die Elektromobilität, enthaltend Polymerzusammensetzungen auf Basis wenigstens eines Polyesters und wenigstens eines Sulfids enthaltend Cer, sowie deren Verwendung zur Herstellung Polyester basierter Hochvoltkomponenten oder zur Markierung Polyester basierter Erzeugnisse als Hochvoltkomponenten mittels Laser.

## Beschreibung

Die vorliegende Erfindung betrifft Hochvoltkomponenten, insbesondere für die Elektromobilität, enthaltend Polymerzusammensetzungen auf Basis wenigstens eines Polyesters und wenigstens eines Sulfids enthaltend Cer, sowie deren Verwendung zur Herstellung Polyester basierter Hochvoltkomponenten oder zur Markierung Polyester basierter Erzeugnisse als Hochvoltkomponenten mittels Laser.

### Stand der Technik

Technische Thermoplaste wie Polyester sind aufgrund ihrer guten mechanischen Stabilität, ihrer chemischen Beständigkeit, den sehr guten elektrischen Eigenschaften und der guten Verarbeitbarkeit, gerade auch im Bereich von Bauteilen für Kraftfahrzeuge, ein wichtiger Werkstoff.

Polyester bilden seit vielen Jahren einen wichtigen Bestandteil zur Fertigung anspruchsvoller Kraftfahrzeugkomponenten. Während über viele Jahre der Verbrennungsmotor das dominierende Antriebskonzept darstellte, ergeben sich im Zuge der Suche nach alternativen Antriebskonzepten auch neue Anforderungen hinsichtlich der Materialauswahl. Eine wesentliche Rolle spielt dabei die Elektromobilität, bei welcher der Verbrennungsmotor teilweise (Hybrid-Fahrzeug [HEV, PHEV, BEV Rex]) oder vollständig (Elektromobil [BEV. FCEV]) durch einen oder mehrere Elektromotoren ersetzt wird, die ihre elektrische Energie typischerweise aus Batterien oder Brennstoffzellen beziehen. Während konventionelle Fahrzeuge mit Verbrennungsmotor als alleinigem Antrieb (ICE [Internal Combustion Engine]) typischerweise mit einem Bordspannungsnetz von 12V auskommen, werden in Hybrid- und Elektrofahrzeugen mit Elektromotoren als Antriebseinheit wesentlich höhere Spannungen benötigt. Dies stellt für den direkten Bereich und die unmittelbare Umgebung von derartig hochspannungsführenden Teilen ein ernstzunehmendes zusätzliches Gefahrenpotential dar, was in technischen Spezifikationen oder auch normativ zunehmend eine Rolle spielt. Eine wichtige Rolle spielt dabei die eindeutige Kennzeichnung dieser Gefährdungsbereiche, um auf diese Weise einen unbeabsichtigten Kontakt mit einem Menschen (Fahrer, Mechaniker, ...) zu vermeiden, wobei wiederum die eindeutige farbliche Kennzeichnung von derartigen Hochvoltbaugruppen eine besonders wichtige Rolle spielt.

So hat das Advanced Vehicle Team des Idaho National Laboratory für HEV (Hybrid Electric Vehical) in **https://avt.inl.gov/sites/default/files/pdf/hev/hevtechspecr1.pdf** eine technische Spezifikation veröffentlicht, die für alle Geräte, welche einer Hochspannung größer oder gleich 60V ausgesetzt sind, unter anderem eine klare Kennzeichnung als "HOCHVOLT" empfiehlt und in diesem Zusammenhang auch auf die Farbe Orange als Kennzeichnung hinweist.

Aufgrund der hohen Verarbeitungstemperaturen von teilweise >300°C in der Compoundierung und im Spritzguss ist gerade für technische Thermoplaste wie Polyester die Auswahl an geeigneten Farbmitteln für die Farbe Orange jedoch sehr eingeschränkt.

EP 0 041 274 B1 beschreibt fluoreszierende Zusammensetzungen mit der Fähigkeit die Wellenlängen des Lichtes zu verändern, Formkörper auf Basis solcher Zusammensetzungen als Lichtwellen umwandelnde Elemente und Vorrichtungen zur Umwandlung von optischer Energie in elektrische Energie unter Verwendung eines solchen Elements. In den Beispielen der EP 0 041 274 B1 wird unter anderem 12H-Phthaloperin-12-on in Polyethylenterephthalat (PET) eingesetzt.

12H-Phthaloperin-12-on [CAS Nr. 6925-69-5], bekannt als Solvent Orange 60, ist beispielsweise erhältlich als Macrolex® Orange 3G von der Firma Lanxess Deutschland GmbH, Köln. Nachteilig ist aber, dass Solvent Orange 60 bei Extremanforderungen, insbesondere unter den Anforderungen in der Elektromobilität, zur Migration aus der Kunststoffmatrix neigt, was bei erhöhten Temperaturen zu einem Nachlassen der Farbintensität führt. Das Solvent Orange 60 migriert dabei an die Oberfläche des Kunststoffes (blooming). Von dort kann es abgerieben, abgewaschen oder aufgelöst werden, sich verflüchtigen (fogging) oder in andere Werkstoffe (z.B. benachbarte Kunststoff- oder Kautschukteile) migrieren (Bleeding). Die Konzentration des Solvent Orange 60 im ursprünglichen Kunststoff reduziert sich, was zum Nachlassen der Farbintensität führt. Das migrierte Solvent Orange 60 hat zudem den Nachteil, dass es durch mechanische oder physikalische Prozesse zu benachbarten Bauteilen transportiert werden kann und dort zu negativen Funktionsbeeinträchtigungen führt. Beispielsweise sei hier ein erhöhter elektrischer Widerstand in einem Schalterkontakt genannt, der durch Ablagerung von Solvent Orange 60 auf der Oberfläche von elektrischen Kontakten resultieren kann. Im Umfeld elektrischer Bauteile ist daher die Migration von Inhaltsstoffen aus Kunststoffen heraus generell unerwünscht, da sie die Eigenschaften der Kunststoffe sowie räumlich benachbarter Teile beeinflussen kann, wodurch die Funktion des elektrischen Bauteils ggf. nicht mehr gewährleistet ist. Ausgehend von der Lehre der EP 0 041 274 B1 bestand die Aufgabe der vorliegenden Erfindung deshalb darin, orange Polymerzusammensetzungen auf Basis von Polyester für Hochvoltkomponenten, insbesondere für Hochvoltkomponenten in Elektrofahrzeugen, bereitzustellen, die gegenüber der Lösung in EP 0 041 274 B1 auf Basis von 12H-Phthaloperin-12-on weniger anfällig für Migration, insbesondere Ausbluten (Bleeding) sind.

Wichtig für Hochvoltkomponenten insbesondere in der Elektromobilität ist aber auch die Möglichkeit einer Kennzeichnung um diese mit Zusatzinformationen wie Seriennummern, Herstellermerkmalen, Installationsinformationen oder sicherheitsrelevanten Informationen zu kennzeichnen. Geeignetes Mittel zur Kennzeichnung Kunststoff basierter Bauteile ist die Laserbeschriftung (siehe **https://de.wikipedia.org/wiki/Laserbeschriftung),** wobei bevorzugt Diodenlaser oder ND:YAG Laser der Wellenlänge 1064nm eingesetzt werden.

Gemäß dem Stand der Technik, werden bei Beschriftungen mit einem Laser der Wellenlänge 1064nm zumeist Antimontrioxid-basierte Additive zur Verbesserung des Beschriftungskontrastes eingesetzt (siehe EP 3 281 974 A1**).** Allerdings ist der Einsatz von Antimontrioxid erfindungsgemäß vorzugsweise zu vermeiden, da es aufgrund eines H351 Gefahrenhinweises ("Kann vermutlich Krebs erzeugen") im Markt negativ besetzt ist. Auch kann sich Antimontrioxid negativ auf die Kriechstromfestigkeit nach **IEC 60112** auswirken, was gerade für Anwendungen in Hochvoltkomponeten für die Elektromobilität besonders nachteilig wäre, weil bei geringerer Kriechstromfestigkeit der Abstand stromführender Baugruppen zueinander vergrößert werden müsste, um Sicherheitsrisiken durch unerwünschten Stromfluss auszuschließen.

Eine zusätzliche Aufgabe der vorliegenden Erfindung ist es also, dass eine Laserbeschriftbarkeit bei einer Laserwellenlänge von 1064nm auch ohne den Zusatz von Antimontrioxid oder Antimontrioxid-haltiger Derivate möglich ist und dass nach Möglichkeit keine dem Antimontrioxid entsprechenden Nachteile durch Abnahme der Kriechstromfestigkeit in Kauf genommen werden müssen.

Idealerweise sollen erfindungsgemäße orange Polyester basierte Formmassen neben der Laserbeschriftbarkeit gegenüber dem oben zitierten Stand der Technik auch eine verbesserte Lichtechtheit (Lightfastness) und eine verbesserte thermische Stabilität aufweisen, indem die ursprüngliche, unmittelbar nach dem Spritzguss erzielte Farbe unter UV-Licht beziehungsweise unter thermischer Beanspruchung jeweils über einen längeren Zeitraum als im Vergleich zu 12H-Phthaloperin-12-on beibehalten wird. **Ein längerer Zeitraum in Bezug auf die thermische Beanspruchung** bedeutet im Rahmen der vorliegenden Erfindung eine Lagerung im Heißlufttrockenschrank bei 80°C für 12 Stunden. Ein **längerer Zeitraum in Bezug auf die Lichtechtheit** bedeutet im Rahmen der vorliegenden Erfindung eine Bestrahlungszeit mit einer Xenon Lampe, 1500 Watt, 45-130 klx, und Wellenlänge 300 - 800 nm von 96h.

Überraschend wurde nun gefunden, dass Hochvoltkomponenten, insbesondere Hochvoltkomponenten für die Elektromobilität, enthaltend thermoplastische Polymerzusammensetzungen auf Basis von Polyester und wenigstens ein Sulfid enthaltend Cer als oranges Farbmittel sowohl die Anforderungen ans Bleeding, als auch an die Lichtechtheit und an die geforderte Laserbeschriftbarkeit erfüllen.

### Erfindungsgegenstand

Gegenstand der Erfindung sind Polymerzusammensetzungen enthaltend wenigstens einen Polyester und wenigstens ein Sulfid enthaltend Cer.

Bevorzugt sind ferner Polymerzusammensetzungen worin auf 100 Massenanteile Polyester 0,01 bis 5 Massenanteile, besonders bevorzugt 0,01 bis 3 Massenanteile, wenigstens eines Sulfids enthaltend Cer eingesetzt werden.

Gegenstand der Erfindung sind aber auch Hochvoltkomponenten, insbesondere Hochvoltkomponenten für die Elektromobilität, basierend auf Polymerzusammensetzungen enthaltend wenigstens ein Polyester und wenigstens ein Sulfids enthaltend Cer.

Gegenstand der Erfindung sind aber auch Hochvoltkomponenten, insbesondere Hochvoltkomponenten für die Elektromobilität, basierend auf Polymerzusammensetzungen enthaltend auf 100 Massenanteile wenigstens eines Polyesters 0,01 bis 5 Massenanteile, besonders bevorzugt 0,01 bis 3 Massenanteile wenigstens eines Sulfids enthaltend Cer.

Die vorliegende Erfindung betrifft aber auch die Verwendung wenigstens eines Sulfids enthaltend Cer zur Herstellung Polyester basierter Polymerzusammensetzungen, vorzugsweise Polyester basierter Hochvoltkomponenten, insbesondere von Polyester basierten Hochvoltkomponenten für die Elektromobilität.

Die Erfindung betrifft zudem die Verwendung wenigstens eines Sulfids enthaltend Cer zur Markierung Polyester basierter Erzeugnisse als Hochvoltkomponenten mittels Laser, vorzugsweise mittels Diodenlaser oder ND:YAG Laser bei einer Wellenlänge von 1064nm.

Vorzugsweise betrifft die vorliegende Erfindung Polymerzusammensetzungen, daraus herzustellende Formmassen und wiederum daraus herzustellende Hochvoltkomponenten bzw. Hochvoltkomponenten für die Elektromobilität mit der Maßgabe, dass diese im RAL-Farbsystem der Farbnummer RAL2003, RAL2004, RAL2007, RAL2008, RAL2009, RAL2010 oder RAL2011 entsprechen. Die vorliegende Erfindung betrifft schließlich ein Verfahren zur Markierung Polyester basierter Erzeugnisse als Hochvoltkomponenten, indem mittels Laser, vorzugsweise mittels Diodenlaser oder ND:YAG Laser bei einer Wellenlänge von 1064nm, die Erzeugnisse bestrahlt werden, wobei wenigstens ein Sulfid enthaltend Cer im Polyester eingesetzt wird.

Bevorzugte Polyester sind C₂-C₁₀Polyalkylenterephthalate oder Polycarbonat, insbesondere Polybutylenterephthalat (PBT).

Die Zubereitung erfindungsgemäßer Polyester basierter Polymerzusammensetzungen für die Anwendung als Hochvoltkomponenten erfolgt durch Mischen der als Edukte einzusetzenden Komponenten A) Polyester und B) wenigstens eines Sulfids enthaltend Cer in wenigstens einem Mischwerkzeug mit der Maßgabe, dass die Polymerzusammensetzungen bzw. die daraus herzustellenden Hochvoltkomponenten oder Hochvoltkomponenten für die Elektromobilität auf Basis von A) und B) im RAL-Farbsystem der Farbnummer RAL2003, RAL2004, RAL2007, RAL2008, RAL2009, RAL2010 oder RAL2011 entsprechen.

Durch das Mischen werden als Zwischenprodukte, auf den erfindungsgemäßen Polymerzusammensetzungen basierende, Formmassen erhalten. Diese Formmassen können entweder ausschließlich aus den Komponenten A) und B) bestehen, oder aber zusätzlich zu den Komponenten A) und B) noch wenigstens eine weitere Komponente enthalten mit der Maßgabe, dass die Formmassen bzw. die daraus herzustellenden Hochvoltkomponenten oder Hochvoltkomponenten für die Elektromobilität auf Basis von A) und B) sowie gegebenenfalls weiterer Komponenten im RAL-Farbsystem der Farbnummer RAL2003, RAL2004, RAL2007, RAL2008, RAL2009, RAL2010 oder RAL2011 entsprechen.

Vorzugsweise wird aus den oben genannten Gründen bei der Herstellung der Polymerzusammensetzungen bzw. Formmassen auf den Einsatz Antimon-basierter Komponenten, insbesondere auf den Einsatz Antimontrioxid-haltiger Derivate, verzichtet.

Zur Klarstellung sei angemerkt, dass vom Rahmen der vorliegenden Erfindung alle aufgeführten allgemeinen oder in Vorzugsbereichen genannten Definitionen und Parameter in beliebigen Kombinationen umfasst sind. Die im Rahmen dieser Anmeldung genannten Normen beziehen sich auf die zum Anmeldetag dieser Erfindung geltenden Fassung.

### Bleeding

Zur Ermittlung des Bleeding wird im Rahmen der vorliegenden Erfindung wie folgt verfahren:
Zunächst werden Kunststoffplatten aus einer Farbmittel enthaltenden und zu untersuchenden Polyester-Zusammensetzung mit den Maßen 60•40•2 mm³ gefertigt. Für Kunststoffplatten im Sinne der vorliegenden Erfindung wird als Farbmittel wenigstens ein Sulfid enthaltend Cer eingesetzt. Anschließend wird eine Weich-PVC-Folie mit den Maßen 30•20•2 mm³ zwischen zwei der zunächst gefertigten Kunststoffplatten eingespannt und die Gesamtheit aller Platten in einem Heißlufttrockenschrank bei 80°C für 12 Stunden gelagert. Die anschließende Bewertung des aus den zwei Kunststoffplatten ins Weich-PVC migrierten Farbmittels erfolgt danach visuell nach dem Graumaßstab gemäß **ISO 105-A02,** wobei ,5' bedeutet, dass die PVC-Folie keine Farbänderung zeigt (kein visuell erkennbarer Farbmittelübergang von den Polyester-Kunststoffplatten auf die PVC-Folie) und '1' bedeutet, dass das PVC-Folie eine starke Farbveränderung zeigt (starker visuell erkennbarer Farbmittelübergang von den Polyester-Kunststoffplatten auf die PVC-Folie).

### Lichtechtheit

Als Maß für die Lichtechtheit (Lightfastness) gilt im Rahmen der vorliegenden Erfindung die Verfärbung nach UV-Lagerung von oben beschriebenen Kunststoffplatten der zu untersuchenden und Farbmittel enthaltenden Polyester-Zusammensetzung mit einem UV-Licht vom Typ Suntest CPS+ mit luftgekühlter Atlas Xenon Lampe, 1500 Watt, 45-130 klx, Wellenlänge 300 - 800 nm und Window Glass Filter 250-267 W/m² des Herstellers Atlas Material Testing Technology GmbH, Linsengericht, Deutschland, und einer Bestrahlungszeit von 96h. Die Bewertung der Verfärbung erfolgt visuell in Anlehnung an den Blaumaßstab (Blue Wool Scale) gemäß DIN EN ISO 105-B02, wobei ,8' für eine hervorragende Lichtechtheit (geringe Farbänderung) und '1' für sehr geringe Lichtechtheit (starke Farbänderung) steht.

### Hochvolt

In der Regelung Nr. 100 der Wirtschaftskommission der Vereinten Nationen für Europa (UNECE) - Einheitliche Bedingungen für die Genehmigung von Fahrzeugen hinsichtlich der besonderen Anforderungen an den Elektroantrieb [2015/505] wird im Abschnitt 2.17 der Begriff "Hochspannung" (engl. "High Voltage") als eine Spannung beschrieben, für die ein elektrisches Bauteil oder ein Stromkreis ausgelegt ist, dessen Effektivwert der Betriebsspannung > 60 V und ≤ 1 500 V (Gleichstrom) oder > 30 V und ≤ 1 000 V (Wechselstrom) ist.

Diese Klassifizierung von "Hochspannung" entspricht der Spannungsklasse B der **ISO6469-3:2018** ("Electrically propelled road vehicles - Safety specifications - Part 3: Electrical safety"). Dort finden sich in Abschnitt 5.2 auch Kennzeichnungsvorschriften für elektrische Komponenten der Spannungsklasse B durch entsprechende Gefahrensymbole oder die Farbe 'Orange'.

### Hochvoltkomponenten bzw. Hochvoltkomponenten für die Elektromobilität

Unter dem Begriff Hochvoltkomponente werden erfindungsgemäß Bauteile oder Erzeugnisse verstanden, die einer Betriebsspannung gemäß Abschnitt 2.17 der oben beschriebenen Regelung Nr. 100 der Wirtschaftskommission der Vereinten Nationen für Europa (UNECE) ausgesetzt werden. Als Hochvoltkomponenten für die Elektromobilität werden erfindungsgemäß bevorzugt Bauteile in Elektrofahrzeugen bezeichnet, welche einer Betriebsspannung größer oder gleich 30V (Gleichstrom) beziehungsweise größer oder gleich 20V (Wechselstrom), besonders bevorzugt - in Anlehnung an die Spannungsklasse B der **ISO6469-3:2018** - einer Betriebsspannung von größer 60V (Gleichstrom) beziehungsweise größer 30V (Wechselstrom) ausgesetzt sind.

Zu den Hochvoltkomponenten für die Elektromobilität gehören erfindungsgemäß sowohl solche Bauteile, die direkt mit den spannungsführenden Teilen in Kontakt stehen, als auch solche, die in direkter Nachbarschaft bzw. räumlicher Nähe dazu die Funktion eines Berührungsschutzes, einer Warnkennzeichnung beziehungsweise einer Abschirmung haben, wobei Bauteile, die direkt mit den spannungsführenden Teilen in Kontakt stehen erfindungsgemäß bevorzugt sind.

Erfindungsgemäße Polymerzusammensetzungen, daraus herzustellende Erzeugnisse, vorzugsweise Hochvoltkomponenten, besonders bevorzugt Hochvoltkomponenten für die Elektromobilität, sind aufgrund des wenigstens einen Sulfids enthaltend Cer orange eingefärbt, wobei Farbtöne, die im RAL-Farbsystem der Farbnummer RAL2003, RAL2004, RAL2007, RAL2008, RAL2009, RAL2010 und RAL2011 entsprechen, besonders bevorzugt sind und die Farbtöne die im RAL-Farbsystem der Farbnummer RAL2003, RAL2004, RAL2008 und RAL2009 entsprechen, ganz besonders bevorzugt sind und RAL 2003 insbesondere bevorzugt ist.

Erfindungsgemäß ebenfalls zulässige "ähnliche Farbtöne" sind solche, deren Farbabstand im L*a*b*-System einen ΔE von <20, bevorzugt ein ΔE <10, besonders bevorzugt ΔE <5 zu dem in der RAL-Farbtabelle eines jeden RAL Farbtons definierten L*a*b*-Wert hat. Zur Erläuterung des ΔE siehe beispielsweise: **https://de.wikipedia.org/wiki/Delta_E.**

### Orange

Im Rahmen der vorliegenden Erfindung gilt als Orange eine Farbe, die im RAL Farbsystem nach **https://de.wikipedia.org/wiki/RAL-Farbe#Orange** in der RAL Farbtabelle eine Farbnummer hat, die mit einer "2" beginnt. Im Einzelnen unterscheidet man zum Anmeldetag der vorliegenden Erfindung Orangetöne gemäß **Tab.1:**

**Tab. 1**

| | | L* | a* | b* |
|---|---|---|---|---|
| RAL 2000 | Gelborange | 58,20 | 37,30 | 68,68 |
| RAL 2001 | Rotorange | 49,41 | 39,79 | 35,29 |
| RAL 2002 | Blutorange | 47,74 | 47,87 | 33,73 |
| RAL 2003 | Pastellorange | 66,02 | 41.22 | 52,36 |
| RAL 2004 | Reinorange | 56,89 | 50,34 | 49,81 |
| RAL 2005 | Leuchtorange | 72,27 | 87,78 | 82,31 |
| RAL 2007 | Leuchthellorange | 76,86 | 47,87 | 97,63 |
| RAL 2008 | Hellrotorange | 60,33 | 46,91 | 60,52 |
| RAL 2009 | Verkehrsorange | 55,83 | 47,79 | 48,83 |
| RAL 2010 | Signalorange | 55,39 | 40,10 | 42,42 |
| RAL 2011 | Tieforange | 59,24 | 40,86 | 64,50 |
| RAL 2012 | Lachsorange | 57,75 | 40,28 | 30,66 |
| RAL 2013 | Perlorange | 40,73 | 32,14 | 34,92 |

In **Tab. 1** sind die geräteunabhängigen CIE L*a*b* Farbwerte für den jeweiligen RAL Wert angegeben: L* steht für die Luminanz, a* = D65 und b* = 10°. Das Farbmodell ist in der EN ISO 11664-4 "Colorimetry -- Part 4: CIE 1976 L*a*b* Colour space" genormt. Zu L*a*b*-Farbraum (auch: CIELAB) siehe: **https://de.wikipedia.org/wiki/Lab-Farbraum.**

Jede Farbe im Farbraum ist durch einen Farbort mit den kartesischen Koordinaten {L*, a*, b*} definiert. Die a*b*-Koordinatenebene wurde in Anwendung der Gegenfarbentheorie konstruiert. Auf der a*-Achse liegen sich Grün und Rot gegenüber, die b*-Achse verläuft zwischen Blau und Gelb. Komplementäre Farbtöne stehen sich jeweils um 180° gegenüber, in ihrer Mitte (dem Koordinatenursprung a*=0, b*=0) ist Grau.

Die L*-Achse beschreibt die Helligkeit (Luminanz) der Farbe mit Werten von 0 bis 100. In der Darstellung steht diese im Nullpunkt senkrecht auf der a*b*-Ebene. Sie kann auch als Neutralgrauachse bezeichnet werden, denn zwischen den Endpunkten Schwarz (L*=0) und Weiß (L*=100) sind alle unbunten Farben (Grautöne) enthalten. Die a*-Achse beschreibt den Grün- oder Rotanteil einer Farbe, wobei negative Werte für Grün und positive Werte für Rot stehen. Die b*-Achse beschreibt den Blau- oder Gelbanteil einer Farbe, wobei negative Werte für Blau und positive Werte für Gelb stehen.

Die a*-Werte reichen von ca. -170 bis +100, die b*-Werte von -100 bis +150, wobei die Maximalwerte nur bei mittlerer Helligkeit bestimmter Farbtöne erreicht werden. Der CIELAB-Farbkörper hat im mittleren Helligkeitsbereich seine größte Ausdehnung, die aber je nach Farbbereich unterschiedlich in Höhe und Größe ist.

Im Rahmen der vorliegenden Erfindung sind Polymerzusammensetzungen sowie daraus herzustellende Hochvoltkomponenten bevorzugt, deren Farbwert dem RAL 2003, Pastellorange mit L*a*b* 66,02 / 41.22 / 52,36 möglichst nahe kommt, wenn nicht sogar diesem genau entspricht. Der Fachmann wird zu diesem Zweck die Mengen der in den erfindungsgemäßen Polymerzusammensetzungen einzusetzenden Komponenten so wählen, dass als Resultat möglichst RAL 2003 erzielt wird.

### Weitere bevorzugte Ausführungsformen der Erfindung

In einer bevorzugten Ausführungsform betrifft die Erfindung Polymerzusammensetzungen, Hochvoltkomponenten, insbesondere Hochvoltkomponenten für die Elektromobilität, enthaltend zusätzlich zu den Komponenten A) und B) noch C) wenigstens einen **Füll und/oder Verstärkungsstoff,** bevorzugt zu 1 bis 150 Massenanteilen, besonders bevorzugt zu 5 bis 80 Massenanteilen, ganz besonders bevorzugt zu 10 bis 50 Massenanteilen, jeweils bezogen auf 100 Massenanteile der Komponente A) mit der Maßgabe, dass die Polymerzusammensetzungen bzw. die daraus herzustellenden Hochvoltkomponenten oder Hochvoltkomponenten für die Elektromobilität im RAL-Farbsystem der Farbnummer RAL2003, RAL2004, RAL2007, RAL2008, RAL2009, RAL2010 oder RAL2011 entsprechen, besonders bevorzugt den Farbnummern RAL2003, RAL2004, RAL2008 oder RAL2009, ganz besonders bevorzugt der Farbnummer RAL 2003.

In einer weiteren bevorzugten Ausführungsform betrifft die Erfindung Polymerzusammensetzungen, Hochvoltkomponenten, insbesondere Hochvoltkomponenten für die Elektromobilität, enthaltend zusätzlich zu den Komponenten A), B) und C) oder anstelle von C) noch D) wenigstens ein **Flammschutzmittel,** bevorzugt zu 3 bis 100 Massenanteilen, besonders bevorzugt zu 5 bis 80 Massenanteilen, ganz besonders bevorzugt zu 10 bis 50 Massenanteilen, jeweils bezogen auf 100 Massenanteile der Komponente A) mit der Maßgabe, dass die Polymerzusammensetzungen bzw. die daraus herzustellenden Hochvoltkomponenten oder Hochvoltkomponenten für die Elektromobilität auf Basis von A), B), C) und D) oder auf Basis von A), B) und D) im RAL-Farbsystem der Farbnummer RAL2003, RAL2004, RAL2007, RAL2008, RAL2009, RAL2010 oder RAL2011 entsprechen, besonders bevorzugt den Farbnummern RAL2003, RAL2004, RAL2008 oder RAL2009, ganz besonders bevorzugt der Farbnummer RAL 2003.

In einer weiteren bevorzugten Ausführungsform betrifft die Erfindung Polymerzusammensetzungen, Hochvoltkomponenten, insbesondere Hochvoltkomponenten für die Elektromobilität, enthaltend zusätzlich zu den Komponenten A), B), C), D) oder anstelle von C) und/oder D) noch E) wenigstens ein weiteres **von den Komponenten B), C) und D) verschiedenes Additiv,** bevorzugt zu 0,01 bis 80 Massenanteile, besonders bevorzugt zu 0,05 bis 50 Massenanteile, ganz besonders bevorzugt zu 0,1 bis 30 Massenanteile, jeweils bezogen auf 100 Massenanteile der Komponente A). Vorzugsweise wird E) eingesetzt mit der Maßgabe, dass die Polymerzusammensetzungen bzw. die daraus herzustellenden Hochvoltkomponenten oder Hochvoltkomponenten für die Elektromobilität auf Basis von A), B), C), D) und E) oder auf Basis von A), B), E) oder auf Basis von A), B), C) und E) oder auf Basis von A), B), D) und E) im RAL-Farbsystem der Farbnummer RAL2003, RAL2004, RAL2007, RAL2008, RAL2009, RAL2010 oder RAL2011 entsprechen, besonders bevorzugt den Farbnummern RAL2003, RAL2004, RAL2008 oder RAL2009, ganz besonders bevorzugt der Farbnummer RAL 2003.

### Polyalkylenterephthalate als Komponente A)

Erfindungsgemäß vorzugsweise als Komponente A) einzusetzende Polyester sind C₂-C₁₀-Polyalkylenterephthalate bzw. Reaktionsprodukte aus einem Alkoholteil mit 2 bis 10 C-Atomen im Alkoholteil und der Terephthalsäure. C₂-C₁₀-Polyalkylenterephthalate sind dem Fachmann bekannt und in der Literatur hinreichend beschrieben. Sie enthalten einen aromatischen Ring in der Hauptkette, der von der Terephthalsäure stammt, und einen aliphatischen Teil, der von einer Dihydroxyverbindung stammt. Der aromatische Ring der Terephthalsäure kann auch substituiert sein. Bevorzugte Substituenten sind Halogene oder C₁-C₄-Alkylgruppen. Bevorzugte Halogene sind Chlor oder Brom. Bevorzugte C₁-C₄-Alkylgruppen sind Methyl-, Ethyl-, n-Propyl- oder n-, i- bzw. t-Butylgruppen.

Als Komponente A) vorzugsweise einzusetzende C₂-C₁₀-Polyalkylenterephthalate können durch Umsetzung von aromatischen Dicarbonsäuren, deren Estern oder anderen esterbildenden Derivaten mit aliphatischen Dihydroxyverbindungen in dem Fachmann bekannter Weise hergestellt werden.

Im Falle der als Komponente A) einzusetzenden C₂-C₁₀-Polyalkylenterephthalate kann ein Teil der zu deren Herstellung zu verwendenden Terephthalsäure, bis zu 30 mol-%, durch 2,6-Naphthalindicarbonsäure, oder Isophthalsäure oder deren Mischungen ersetzt werden. Bis zu 70 mol-%, vorzugsweise nicht mehr als 10 mol-% der Terephthalsäure können durch aliphatische oder cycloaliphatische Dicarbonsäuren wie Adipinsäure, Azelainsäure, Sebacinsäure, Dodecandisäuren und Cyclohexan-dicarbonsäuren ersetzt werden.

Von den aliphatischen Dihydroxyverbindungen werden Diole mit 2 bis 6 Kohlenstoffatomen, insbesondere 1,2-Ethandiol, 1,3-Propandiol, 1,4-Butandiol, 1,6-Hexandiol, 1,4-Hexandiol, 1,4-Cyclohexandiol, 1,4-Cyclohexandimethanol und Neopentylglykol oder deren Mischungen bevorzugt. Besonders bevorzugte Polyalkylenterephthalate leiten sich von Alkandiolen mit 2 bis 4 C-Atomen ab. Von diesen werden insbesondere Polyethylenterephthalat, Polypropylenterephthalat und Polybutylenterephthalat oder deren Mischungen bevorzugt. Weiterhin bevorzugt sind PET und/oder PBT, welche bis zu 1 Gew.-%, vorzugsweise bis zu 0,75 Gew.-% 1,6-Hexandiol und/oder 2-Methyl-1,5-Pentandiol als weitere Monomereinheiten enthalten.

Vorzugsweise weisen als Komponente A) einzusetzende C₂-C₁₀-Polyalkylenterephthalate eine nach ISO 1628 zu bestimmende Viskositätszahl m Bereich von 50 bis 220, vorzugsweise im Bereich von 80 bis 160 auf, wobei in einer 0,5 gew.-%igen Lösung in einem Phenol/o-Dichlorbenzolgemisch, Gew.-Verh. 1:1 bei 25°C, gemessen wird.

Erfindungsgemäß als Komponente A) bevorzugt einzusetzende C₂-C₁₀-Polyalkylenterephthalate weisen vorzugsweise einen Carboxylendgruppengehalt von bis zu 100 mval/kg Polyester, besonders bevorzugt von bis zu 50 mval/kg Polyester und insbesondere bevorzugt von bis zu 40 mval/kg Polyester auf. Derartige C₂-C₁₀-Polyalkylenterephthalate können beispielsweise nach dem Verfahren der DE-A 44 01 055 hergestellt werden. Der Carboxylendgruppengehalt wird üblicherweise durch Titrationsverfahren, insbesondere Potentiometrie, bestimmt.

Insbesondere bevorzugte und als Komponente A) einzusetzende C₂-C₁₀-Polyalkylenterephthalate werden mit Ti-Katalysatoren hergestellt. Diese weisen nach der Polymerisation vorzugsweise einen restlichen Ti-Gehalt von ≤250 ppm, besonders bevorzugt von <200 ppm, ganz besonders bevorzugt von <150 ppm auf.

Das erfindungsgemäß als Komponente A) bevorzugt einzusetzende Polybutylenterephthalat (PBT) [CAS Nr. 24968-12-5] wird aus Terephthalsäure oder ihren reaktionsfähigen Derivaten und Butandiol nach bekannten Methoden hergestellt (Kunststoff-Handbuch, Bd. VIII, S. 695-743, Karl Hanser Verlag, München 1973).

Bevorzugt enthält das als Komponente A) einzusetzende PBT mindestens 80 Mol-%, vorzugsweise mindestens 90 Mol-%, bezogen auf die Dicarbonsäure, Terephthalsäurereste.

Das erfindungsgemäß bevorzugt als Komponente A) einzusetzende PBT kann in einer Ausführungsform neben Terephthalsäureresten bis zu 20 Mol-% Reste anderer aromatischer Dicarbonsäuren mit 8 bis 14 C-Atomen oder Reste aliphatischer Dicarbonsäuren mit 4 bis 12 C-Atomen enthalten, insbesondere Reste von Phthalsäure, Isophthalsäure, Naphthalin-2,6-dicarbonsäure, 4,4'-Diphenyldicarbonsäure, Bernsteinsäure, Adipinsäure, Sebacinsäure, Azelainsäure, Cyclohexandiessigsäure, Cyclohexandicarbonsäure, 2,5-Furandicarbonsäure.

Das erfindungsgemäß bevorzugt als Komponente A) einzusetzende PBT kann in einer Ausführungsform neben Butandiol bis zu 20 Mol-% andere aliphatische Diole mit 3 bis 12 C-Atomen oder bis zu 20 Mol -% cycloaliphatische Diole mit 6 bis 21 C-Atomen enthalten, bevorzugt Reste von Propandiol-1,3, 2-Ethylpropandiol-1,3, Neopentylglykol, Pentan-diol-1,5, Hexandiol-1.6, 1,4-Cyclohexandimethanol, 3-Methylpentandiol-2,4, 2-Methylpentandiol-2,4, 2,2,4-Trimethylpentandiol-1,3, 2,2,4-Trimethylpentandiol-1,5, 2-Ethylhexandiol-1,3, 2,2-Diethylpropandiol-1,3, Hexandiol-2,5, 1,4-Di-(β-hydroxyethoxy)-benzol, 2,2-Bis-(4-hydroxycyclohexyl)-propan, 2,4-Dihydroxy-1,1,3,3-tetramethylcyclobutan,2,2-bis-(3-β-hydroxyethoxyphenyl)-propan und 2,2-bis-(4-hydroxypropoxyphenyl)-propan.

Bevorzugt als Komponente A) einzusetzendes PBT hat eine intrinsische Viskosität nach EN-ISO 1628/5 im Bereich von 40 bis 170cm³/g, besonders bevorzugt im Bereich von 50 bis 150cm³/g, ganz besonders bevorzugt im Bereich von 65 bis 135cm³/g, jeweils gemessen im Ubbelohde Viskosimeter in Phenol/o-Dichlorbenzol (1:1 Gew.-Teile) bei 25°C. Die intrinsische Viskosität *iV,* auch als Staudinger-Index oder Grenzviskosität bezeichnet, ist nach der Mark-Houwink-Gleichung proportional zur mittleren Molekülmasse und ist die Extrapolation der Viskositätszahl VN für den Fall verschwindender Polymerkonzentrationen. Sie kann aus Messreihen oder durch die Verwendung geeigneter Näherungsverfahren (z. B. Billmeyer) abgeschätzt werden. Die VN [ml/g] erhält man aus der Messung der Lösungsviskosität im Kapillar-Viskosimeter, beispielsweise Ubbelohde-Viskosimeter. Die Lösungsviskosität ist ein Maß für das mittlere Molekulargewicht eines Kunststoffs. Die Bestimmung erfolgt an gelöstem Polymer, wobei unterschiedliche Lösungsmittel (m-Kresol, Tetrachlorethan, Phenol, 1,2-Dichlorbenzol, etc) und Konzentrationen zum Einsatz kommen. Durch die Viskositätszahl VN ist eine Kontrolle der Verarbeitungs- und Gebrauchseigenschaften von Kunststoffen möglich. Eine thermische Beanspruchung des Polymers, Alterungsvorgänge oder das Einwirken von Chemikalien, Bewitterung und Licht können durch vergleichende Messungen untersucht werden. Siehe hierzu auch: http://de.wikipedia.org/wiki/Viskosimetrie und "http://de.wikipedia.org/wiki/Mark-Houwink-Gleichung".

Das bevorzugtals Komponente A) einzusetzende PBT kann auch im Gemisch mit anderen Polymeren eingesetzt werden. Die Herstellung erfindungsgemäß einzusetzender PBT Blends erfolgt durch Compoundieren. Während einer solchen Compoundierung können zudem übliche Additive, insbesondere Entformungsmittel oder Elastomere in der Schmelze zugemischt werden, wodurch die Eigenschaften der Blends verbessert werden.

Erfindungsgemäß bevorzugt einzusetzendes PBT kann als Pocan® B 1300 von der Lanxess Deutschland GmbH, Köln, bezogen werden.

### Polycarbonat als Komponente A)

Erfindungsgemäß bevorzugt kann als Polyester der Komponente A) auch wenigstens ein Thermoplast aus der Gruppe der Polycarbonate eingesetzt werden.

Erfindungsgemäß bevorzugt einzusetzende Polycarbonate sind solche Homopolycarbonate oder Copolycarbonate auf Basis von Bisphenolen der allgemeinen Formel (I),

HO-Z-OH (I)

worin Z für einen divalenten organischen Rest mit 6 bis 30 C-Atomen steht der eine oder mehrere aromatische Gruppen enthält.

Bevorzugt wird als Komponente A) wenigstens ein Polycarbonat auf Basis von Bisphenolen der Formel (la) eingesetzt 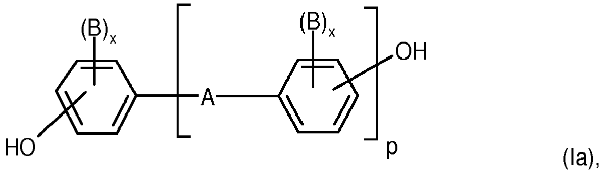 worin
A für eine Einfachbindung oder für einen Rest der Reihe C₁-C₅-Alkylen, C₂-C₅-Alkyliden, C₅-C₆-Cycloalkyliden, -O-, -SO-, -CO-, -S-, -SO₂-, C₆-C₁₂-Arylen steht, woran weitere aromatische, gegebenenfalls Heteroatome enthaltende, Ringe kondensiert sein können,
oder A für einen Rest der Formel (II) oder (III) steht 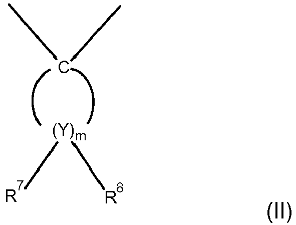 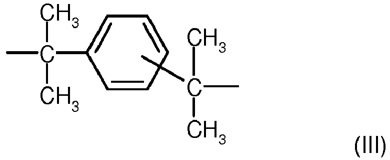 worin
R⁷ und R⁸ für jedes Y individuell wählbar sind und unabhängig voneinander für Wasserstoff oder C₁-C₆-Alkyl stehen, vorzugsweise für Wasserstoff, Methyl oder Ethyl stehen,
B jeweils für C₁-C₁₂-Alkyl, vorzugsweise für Methyl, Halogen, vorzugsweise Chlor und/oder Brom, steht,
x jeweils unabhängig voneinander für 0, 1 oder 2 steht,
p für 1 oder 0 steht,
Y für Kohlenstoff steht, und
m für eine ganze Zahl von 4 bis 7 steht, bevorzugt für 4 oder 5 steht, mit der Maßgabe, dass an mindestens einem Y (Kohlenstoffatom) R⁷ und R⁸ gleichzeitig für Alkyl stehen.

In bevorzugter Ausführungsform gilt:
wenn m für 4 steht, steht Y für -CR⁷R⁸-CR⁷R⁸-CR⁷R⁸-CR⁷R⁸-;
wenn m für 5 steht, steht Y für - CR⁷R⁸-CR⁷R⁸-CR⁷R⁸-CR⁷R⁸-CR⁷R⁸-;
wenn m für 6 steht, steht Y für -CR⁷R⁸-CR⁷R⁸-CR⁷R⁸-CR⁷R⁸-CR⁷R⁸-CR⁷R⁸-; und
wenn m für 7 steht, steht Y für -CR⁷R⁸-CR⁷R⁸-CR⁷R⁸-CR⁷R⁸-CR⁷R⁸-CR⁷R⁸-CR⁷R⁸-.

Bevorzugte Bisphenole enthaltend die allgemeine Formel (II) sind Bisphenole aus der Gruppe Dihydroxydiphenyle, Bis-(hydroxyphenyl)-alkane, Bis-(hydroxyphenyl)-cycloalkane, Indanbisphenole, Bis-(hydroxyphenyl)-sulfide, Bis-(hydroxyphenyl)-ether, Bis-(hydroxyphenyl)-ketone, Bis-(hydroxyphenyl)-sulfone, Bis-(hydroxyphenyl)-sulfoxide und α ,α'-Bis-(hydroxyphenyl)-diisopropylbenzole.

Auch Derivate der genannten Bisphenole, die vorzugsweise durch Alkylierung oder Halogenierung an den aromatischen Ringen der genannten Bisphenole erhältlich sind, sind bevorzugt einzusetzende Bisphenole enthaltend die allgemeinen Formel (II).

Besonders bevorzugte Bisphenole enthaltend die allgemeine Formel (II) sind Hydrochinon, Resorcin, 4,4'-Dihydroxydiphenyl, Bis-(4-hydroxyphenyl)sulfid, Bis-(4-hydroxyphenyl)sulfon, Bis-(3,5-dimethyl-4-hydroxyphenyl)-methan, Bis-(3,5-dimethyl-4-hydroxyphenyl)-sulfon, 1,1-Bis-(3,5-dimethyl-4-hydroxyphenyl)-p/m-diisopropylbenzol, 1,1-Bis-(4-hydroxyphenyl)-1-phenyl-ethan, 1,1-Bis-(3,5-dimethyl-4-hydroxyphenyl)-cyclohexan, 1,1-Bis-(4-hydroxyphenyl)-3-methylcyclohexan, 1,1-Bis-(4-hydroxyphenyl)-3,3-dimethylcyclohexan, 1,1-Bis-(4-hydroxyphenyl)-4-methylcyclohexan. 1,1-Bis-(4-hydroxyphenyl)-cyclohexan, 1,1-Bis-(4-hydroxyphenyl)-3,3,5-trimethylcyclohexan, 2,2-Bis-(3,5-dichlor-4-hydroxyphenyl)-propan, 2,2-Bis-(3-methyl-4-hydroxyphenyl)-propan, 2,2-Bis-(3,5-dimethyl-4-hydroxyphenyl)-propan, 2,2-Bis-(4-hydroxyphenyl)-propan (d.h. Bisphenol A), 2,2-Bis-(3-chlor-4-hydroxyphenyl)-propan, 2,2-Bis-(3,5-dibrom-4-hydroxyphenyl)-propan, 2,4-Bis-(4-hydroxyphenyl)-2-methylbutan, 2,4-Bis-(3,5-dimethyl-4-hydroxyphenyl)-2-methylbutan, α,α'-Bis-(4-hydroxyphenyl)-o-diisopropylbenzol, α,α'-Bis-(4-hydroxyphenyl)-m-diisopropylbenzol (d. h. Bisphenol M), α,α'-Bis-(4-hydroxyphenyl)-p-diisopropylbenzol und Indanbisphenol.

Die beschriebenen Bisphenole gemäß der allgemeinen Formel (II) können nach dem Fachmann bekannten Verfahren, vorzugsweise aus den entsprechenden Phenolen und Ketonen, hergestellt werden.

Auch die als Komponente A) einzusetzenden Polycarbonate können nach bekannten Verfahren hergestellt werden. Bevorzugte Verfahren zur Herstellung von Polycarbonaten sind zum Beispiel die Herstellung aus Bisphenolen mit Phosgen nach dem Phasengrenzflächenverfahren, oder aus Bisphenolen mit Phosgen nach dem Verfahren in homogener Phase, dem sogenannten Pyridinverfahren, oder aus Bisphenolen mit Kohlensäureestern nach dem Schmelzeumesterungsverfahren. Die genannten Bisphenole und Verfahren zu ihrer Herstellung sind zum Beispiel beschrieben in der Monographie H. Schnell, "Chemistry and Physics of Polycarbonates", Polymer Reviews, Band 9, S. 77-98, Interscience Publishers, New York, London, Sidney, 1964 und in US-A 3 028 635**,** in US-A 3 062 781**,** in US-A 2 999 835**,** in US-A 3 148 172**,** in US-A 2 991 273, in US-A 3 271 367, in US-A 4 982 014**,** in US-A 2 999 846, in DE-A 1 570 703**,** in DE-A 2 063 050, in DE-A 2 036 052**,** in DE-A 2 211 956, in DE-A 3 832 396, und in FR-A 1 561 518 sowie in den Japanischen Offenlegungsschriften mit den Anmeldenummern JP-A 62039 1986**,** JP-A 62040 1986 und JP-A 105550 1986**.**

1,1-Bis-(4-hydroxyphenyl)-3,3,5-trimethylcyclohexan und seine Herstellung ist z.B. beschrieben in US-A 4 982 014**.**

Indanbisphenole und ihre Herstellung sind zum Beispiel beschrieben in US-A 3 288 864**,** in JP-A 60 035 150 und in US-A 4 334 106**.** Indanbisphenole können zum Beispiel aus Isopropenylphenol oder dessen Derivaten oder aus Dimeren des Isopropenylphenols oder dessen Derivaten in Gegenwart eines Friedel-Craft-Katalysators in organischen Lösungsmitteln hergestellt werden.

Das Schmelzeumesterungsverfahren ist beschrieben in H. Schnell, "Chemistry and Physics of Polycarbonates", Polymer Reviews, Band 9, S. 44 bis 51, Interscience Publishers, New York, London, Sidney, 1964 sowie in DE-A 1 031 512**.**

Bei der Herstellung von Polycarbonat werden bevorzugt Rohstoffe und Hilfsstoffe mit einem geringen Grad an Verunreinigungen eingesetzt. Insbesondere bei der Herstellung nach dem Schmelzeumesterungsverfahren sollen die eingesetzten Bisphenole und die eingesetzten Kohlensäurederivate möglichst frei von Alkaliionen und Erdalkaliionen sein. Derart reine Rohstoffe sind zum Beispiel erhältlich, indem man die Kohlensäurederivate, insbesondere Kohlensäureester, und die Bisphenole umkristallisiert, wäscht oder destilliert.

Die erfindungsgemäß bevorzugt einzusetzenden Polycarbonate weisen vorzugsweise ein Gewichtsmittel der molaren Masse M_{w} im Bereich von 10 000 bis 200 000 g/mol auf, welches sich durch Ultrazentrifugation (siehe K. Schilling, Analytische Ultrazentrifugation, Nanolytics GmbH, Dallgow, Seiten 1-15) oder Streulichtmessung gemäß DIN EN ISO 16014-5:2012-10 bestimmen lässt. Besonders bevorzugt weisen die einzusetzenden Polycarbonate ein Gewichtsmittel der molaren Masse im Bereich von 12.000 bis 80.000 g/mol, insbesondere bevorzugt ein Gewichtsmittel der molaren Masse im Bereich von 20.000 bis 35.000 g/mol.

Die mittlere molare Masse der erfindungsgemäß bevorzugt als Komponente A) einzusetzenden Polycarbonate kann vorzugsweise in bekannter Weise durch eine entsprechende Menge an Kettenabbrechern eingestellt werden. Die Kettenabbrecher können einzeln oder als Mischung verschiedener Kettenabbrecher eingesetzt werden.

Bevorzugte Kettenabbrecher sind sowohl Monophenole als auch Monocarbonsäuren. Bevorzugte Monophenole sind Phenol, p-Chlorphenol, p-tert.-Butylphenol, Cumylphenol oder 2,4,6-Tribromphenol, sowie langkettige Alkylphenole, insbesondere 4-(1,1,3,3-Tetramethylbutyl)-phenol oder Monoalkylphenole bzw. Dialkylphenole mit insgesamt 8 bis 20 C-Atomen in den Alkylsubstituenten, insbesondere 3,5-di-tert.-Butylphenol, p-tert.-Octylphenol, p-Dodecylphenol, 2-(3,5-Dimethyl-heptyl)-phenol oder 4-(3,5-Dimethyl-heptyl)-phenol. Bevorzugte Monocarbonsäuren sind Benzoesäure, Alkylbenzoesäuren oder Halogenbenzoesäuren.

Besonders bevorzugte Kettenabbrecher sind Phenol, p-tert.-Butylphenol, 4-(1,1,3,3-Tetramethylbutyl)-phenol oder Cumylphenol.

Die Menge an einzusetzenden Kettenabbrechern liegt bevorzugt im Bereich von 0,25 bis 10 Mol-%, bezogen auf die Summe der jeweils eingesetzten Bisphenole.

Die erfindungsgemäß bevorzugt als Komponente A) einzusetzenden Polycarbonate können in bekannter Weise verzweigt sein, vorzugsweise durch den Einbau von trifunktionellen oder mehr als trifunktionellen Verzweigern. Bevorzugte Verzweiger sind solche mit drei oder mehr als drei phenolischen Gruppen oder solche mit drei oder mehr als drei Carbonsäuregruppen.

Besonders bevorzugte Verzweiger sind Phloroglucin, 4,6-Dimethyl-2,4,6-tri-(4-hydroxyphenyl)-hepten-2,4,6-Dimethyl-2,4,6-tri-(4-hydroxyphenyl)-heptan, 1,3,5-Tri-(4-hydroxyphenyl)-benzol, 1,1,1-Tris-(4-hydroxyphenyl)-ethan, Tri-(4-hydroxyphenyl)-phenylmethan,2,2-Bis-[4,4-bis-(4-hydroxyphenyl)-cyclohexyl]-propan, 2,4-Bis-(4-hydroxyphenyl-isopropyl)-phenol, 2,6-Bis-(2-hydroxy-5'-methyl-benzyl)-4-methylphenol, 2-(4-Hydroxyphenyl)-2-(2,4-dihydroxyphenyl)-propan, Hexa-(4-(4-hydroxyphenyl-isopropyl)-phenyl)-terephthalsäureester, Tetra-(4-hydroxyphenyl)-methan, Tetra-(4-(4-hydroxyphenyl-isopropyl)-phenoxy)-methan und 1,4-Bis-(4',4"-dihydroxytriphenyl)-methylbenzol, 2,4-Dihydroxybenzoesäure, Trimesinsäure, Cyanurchlorid, 3,3-Bis-(3-methyl-4-hydroxyphenyl)-2-oxo-2,3-dihydroindol, Trimesinsäuretrichlorid oder α,α',α"-Tris-(4-hydroxyphenol)-1,3,5-triisopropylbenzol.

Ganz besonders bevorzugte Verzweiger sind 1,1,1-Tris-(4-hydroxyphenyl)-ethan oder 3,3-Bis-(3-methyl-4-hydroxyphenyl)-2-oxo-2,3-dihydroindol.

Die Menge der einzusetzenden Verzweiger liegt vorzugsweise im Bereich von 0,05 Mol-% bis 2 Mol-%, bezogen auf Mole eingesetzter Bisphenole.

Vorzugsweise werden die Verzweiger im Falle der Herstellung des Polycarbonates nach dem Phasengrenzflächenverfahren mit den Bisphenolen und den Kettenabbrechern in der wässrig alkalischen Phase vorgelegt, oder in einem organischen Lösungsmittel gelöst zusammen mit den Kohlensäurederivaten zugegeben. Im Falle des Umesterungsverfahrens werden die Verzweiger bevorzugt zusammen mit den Dihydroxyaromaten oder Bisphenolen dosiert.

Bevorzugt einzusetzende Katalysatoren bei der Herstellung von erfindungsgemäß bevorzugt als Komponente A) einzusetzendem Polycarbonat nach dem Schmelzeumesterungsverfahren sind Ammoniumsalze und Phosphoniumsalze, wie sie beispielsweise in US-A 3 442 864**,** JP-A-14742/72**,** US-A 5 399 659 oder DE-A 19 539 290 beschrieben werden.

Copolycarbonate können in einer bevorzugten Ausführungsform auch als Komponente A) eingesetzt werden. Copolycarbonate im Sinne der Erfindung sind insbesondere Polydiorganosiloxan-Polycarbonat-Blockcopolymere, deren Gewichtsmittel der molaren Masse M_{w} bevorzugt im Bereich von 10 000 bis 200 000 g/mol, besonders bevorzugt im Bereich von 20 000 bis 80 000 g/mol liegt, ermittelt durch Gelchromatographie gemäß DIN EN ISO 16014-5:2012-10 nach vorheriger Eichung durch Lichtstreuungsmessung oder Ultrazentrifugation. Der Gehalt an aromatischen Carbonatstruktureinheiten in den Polydiorganosiloxan-Polycarbonat-Blockcopolymeren liegt vorzugsweise im Bereich von 75 bis 97,5 Gew.-%, besonders bevorzugt im Bereich von 85 bis 97 Gew.-%. Der Gehalt an Polydiorganosiloxanstruktureinheiten in den Polydiorganosiloxan-Polycarbonat-Blockcopolymeren liegt vorzugsweise im Bereich von 25 bis 2,5 Gew.-%, besonders bevorzugt im Bereich von 15 bis 3 Gew.-%. Die Polydiorganosiloxan-Polycarbonat-Blockcopolymeren können vorzugsweise ausgehend von α,ω-Bishydroxyaryloxy-endgruppen-haltigen Polydiorganosiloxanen mit einem mittleren Polymerisationsgrad Pₙ im Bereich von 5 bis 100, besonders bevorzugt mit einem mittleren Polymerisationsgrad Pₙ im Bereich von 20 bis 80, hergestellt werden.

Besonders bevorzugt als Komponente A) einzusetzende Polycarbonate sind das Homopolycarbonat auf Basis von Bisphenol A, das Homopolycarbonat auf Basis von 1,1-Bis-(4-hydroxyphenyl)-3,3,5-trimethylcyclohexan und die Copolycarbonate auf Basis der beiden Monomere Bisphenol A und 1,1-Bis-(4-hydroxyphenyl)-3,3,5-trimethylcyclohexan (= Bisphenol TMC). Erfindungsgemäß bevorzugt als Komponente A) einzusetzende Polycarbonate sind beispielsweise unter der Marke Makrolon® bei der Covestro AG, Leverkusen erhältlich.

In einer Ausführungsform können den als Komponente A) einzusetzenden Polycarbonaten übliche Additive, insbesondere Entformungsmittel, in der Schmelze zugemischt oder auf der Oberfläche aufgebracht werden. Bevorzugt enthalten die als Komponente A) einzusetzenden Polycarbonate bereits Entformungsmittel vor einer sich anschließenden Compoundierung mit den anderen Komponenten, wobei der Fachmann unter Compoundierung (aus dem Englischen: *Compound* = "Mischung") einen Begriff aus der Kunststofftechnik versteht, welcher mit Kunststoffaufbereitung gleichzusetzen ist und den Veredelungsprozess von Kunststoffen durch Beimischung von Zuschlagstoffen (Füllstoffe, Additive usw.) zur gezielten Optimierung der Eigenschaftsprofile beschreibt. Eine Compoundierung erfolgt vorzugsweise in Extrudern, besonders bevorzugt in gleichläufigen Doppelschneckenextrudern, gegenläufigen Doppelschneckenextrudern, Planetwalzenextrudern oder Ko-Knetern und umfasst die Verfahrensoperationen Fördern, Aufschmelzen, Dispergieren, Mischen, Entgasen und Druckaufbau.

In einer bevorzugten Ausführungsform können als Komponente A) aber auch Blends von Polycarbonat und Polyalkylenterephthalaten eingesetzt werden, die ebenfalls bei der Covestro AG unter der Marke Makroblend® angeboten werden. Bevorzugt handelt es sich hierbei um PC-PET-Blends, PC-PBT-Blends oder um PC-PCT-G-Blends, wobei PC für Polycarbonat, PET für Polyethylenterephthalat, PBT für Polybutylenterephthalat und PCT für Polycyclohexylendimethylenterephthalat steht.

### Komponente B)

Erfindungsgemäß wird als Komponente B) wenigstens ein Sulfid enthaltend Cer eingesetzt. Bevorzugte Sulfide enthaltend Cer sind Cer(III)sulfid (Ce₂S₃) [CAS-Nr. 12014-93-6], auch bekannt als C.I.Pigment Orange 75, oder Cer(III)sulfid / Lanthan(III)sulfid (Ce₂S₃ / La₂S₃) [CAS-Nr. 12014-93-6 ; CAS-Nr. 12031-49-1] auch bekannt als C.I. Pigment Orange 78. Erfindungsgemäß besonders bevorzugt wird als Sulfid enthaltend Cer das Mischsulfid Cer(III)sulfid / Lanthan(III)sulfid (C.I. Pigment Orange 78) eingesetzt. Bezüglich der C.I. Klassifizierung siehe **https://de.wikipedia.org/wiki/Colour_Index.**

Pigment Orange 75 und Pigment Orange 78 können beispielsweise bei der Firma Chemikos, Dr. Oliver Schmitt, Karlsruhe, Deutschland **[https://www.chemikos.de/cersulfid-orange-pigmente]** oder unter dem Handelsnamen Neolor® Orange S bzw. Neolor® Light Orange S bei der Fa. Baotou Hongbo Te Technology co. Ltd., 'Inner Mongolia', China bezogen werden.

Das wenigstens eine Sulfid enthaltend Cer kann erfindungsgemäß einzeln oder im Gemisch mit wenigstens einem weiteren Sulfid enthaltend Cer eingesetzt werden, wobei auch Mischoxide oder Mischsulfide des Cers mit anderen Lanthaniden, vorzugsweise mit Lanthan erfindungsgemäß umfasst sind, mit der Maßgabe, dass die Polymerzusammensetzungen bzw. die daraus herzustellenden Hochvoltkomponenten oder Hochvoltkomponenten für die Elektromobilität im RAL-Farbsystem der Farbnummer RAL2003, RAL2004, RAL2007, RAL2008, RAL2009, RAL2010 oder RAL2011 entsprechen, besonders bevorzugt den Farbnummern RAL2003, RAL2004, RAL2008 oder RAL2009, ganz besonders bevorzugt der Farbnummer RAL 2003.

Das erfindungsgemäß als Komponente B) einzusetzende wenigstens eine Sulfid enthaltend Cer kann direkt als Pulver, oder aber in Form einer Paste oder eines Masterbatches, Kompaktes oder Konzentrates in Komponente A) eingesetzt werden, wobei Masterbatche bevorzugt sind und Masterbatche in einer der jeweiligen Komponente A) entsprechenden Polymermatrix besonders bevorzugt sind.

### Komponente C)

In bevorzugter Ausführungsform wird als Komponente C) wenigstens ein **Füllstoff oder Verstärkungsstoff** eingesetzt. Dabei können auch Mischungen aus zwei oder mehreren unterschiedlichen Füllstoffen oder Verstärkungsstoffen eingesetzt werden.

Vorzugsweise wird wenigstens ein Füll- oder Verstärkungsstoff aus der Gruppe Kohlenstofffasern [CAS Nr. 7440-44-0], Glaskugeln oder Voll- oder Hohlglaskugeln, Glasfasern, gemahlenes Glas, amorphes Quarzglas, Aluminium-Borsilikatglas mit einem Alkaligehalt 1% (E-Glas) [CAS Nr. 65997-17-3], amorphe Kieselsäure [CAS Nr. 7631-86-9], Quarzmehl [CAS Nr. 14808-60-7], Calciumsilicat [CAS Nr. 1344-95-2], Calciummetasilicat [CAS Nr. 10101-39-0], Magnesiumcarbonat [CAS Nr. 546-93-0], Kaolin [CAS Nr. 1332-58-7], calciniertes Kaolin [CAS Nr. 92704-41-1], Kreide [CAS Nr.1317-65-3], Kyanit [CAS Nr. 1302-76-7], gepulverter oder gemahlener Quarz [CAS Nr. 14808-60-7], Glimmer [CAS Nr. 1318-94-1], Phlogopit [CAS Nr. 12251-00-2], Bariumsulfat [CAS Nr. 7727-43-7], Feldspat [CAS Nr. 68476-25-5], Wollastonit [CAS Nr. 13983-17-0], Montmorillonit [CAS Nr. 67479-91-8], Pseudoböhmit der Formel AIO(OH), Magnesiumcarbonat [CAS Nr. 12125-28-9] und Talkum [CAS Nr. 14807-96-6] eingesetzt.

Unter den faserförmigen Füllstoffen oder Verstärkungsstoffen sind Glasfasern und Wollastonit besonders bevorzugt, wobei Glasfasern ganz besonders bevorzugt sind. Es können auch Kohlenstofffasern als Füllstoff oder Verstärkungsstoff eingesetzt werden.

Bezüglich der Glasfasern unterscheidet der Fachmann gemäß **"http://de.wikipedia.org/wiki/Faser-Kunststoff-Verbund"** geschnittene Fasern, auch als Kurzfasern bezeichnet, mit einer Länge im Bereich von 0,1 bis 1 mm, Langfasern mit einer Länge im Bereich von 1 bis 50 mm und Endlosfasern mit einer Länge L > 50 mm.

Kurzfasern werden vorzugsweise in der Spritzgusstechnik eingesetzt und können direkt mit einem Extruder verarbeitet werden. Langfasern können ebenfalls noch in Extrudern verarbeitet werden. Sie finden im großen Umfang Einsatz beim Faserspritzen. Langfasern werden häufig Duroplasten als Füllstoff zugemischt. Endlosfasern werden als Rovings oder Gewebe in faserverstärkten Kunststoffen eingesetzt. Erzeugnisse mit Endlosfasern erzielen die höchsten Steifigkeits- und Festigkeitswerte. Des Weiteren werden gemahlene Glasfasern angeboten, deren Länge nach der Vermahlung typischerweise im Bereich von 70 bis 200 µm liegt.

Erfindungsgemäß bevorzugt als Komponente C) einzusetzende Glasfasern sind geschnittene Langglasfasern mit einer mittels Laserdiffraktometrie gemäß **ISO 13320** zu bestimmenden mittleren Ausgangslänge im Bereich von 1 bis 50 mm, besonders bevorzugt im Bereich von 1 bis 10 mm, ganz besonders bevorzugt im Bereich von 2 bis 7 mm. Zu Laserbeugungs-Partikelgrößenbestimmung/Laserdiffraktometrie gemäß der Norm **ISO 13320** siehe: **https://de.wikipedia.org/wiki/Laserbeugungs-Partikelgr%C3%B6%C3%9Fenanalyse**

Bevorzugte, als Komponente C) einzusetzende Glasfasern haben einen mittels Laserdiffraktometrie gemäß **ISO 13320** zu bestimmenden mittleren Faserdurchmesser im Bereich von 7 bis 18 µm, besonders bevorzugt im Bereich von 9 bis 15 µm.

Die als Komponente C) einzusetzenden Füllstoffe, vorzugsweise Glasfasern, werden in einer bevorzugten Ausführungsform mit einem geeigneten Schlichtesystem oder einem Haftvermittler bzw. Haftvermittlersystem ausgerüstet. Bevorzugt wird ein Schlichtesystem bzw. ein Haftvermittler auf Silanbasis eingesetzt. Besonders bevorzugte Haftvermittler auf Silanbasis für die Behandlung der Komponente C), insbesondere für die Behandlung von Glasfasern, sind Silanverbindungen der allgemeine Formel (I)

(X-(CH₂)_{q})ₖ-Si-(O-CrH₂ᵣ₊₁)₄₋ₖ (I)

worin
- X: für NH₂-, Carboxyl-, HO- oder 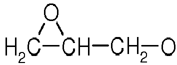 steht,
- q: in Formel (I) für eine ganze Zahl von 2 bis 10, bevorzugt 3 bis 4 steht,
- r: in Formel (I) für eine ganze Zahl von 1 bis 5, bevorzugt 1 bis 2 steht und
- k: in Formel (I) für eine ganze Zahl von 1 bis 3, bevorzugt 1 steht.

Insbesondere bevorzugte Haftvermittler sind Silanverbindungen aus der Gruppe Aminopropyltrimethoxysilan, Aminobutyltrimethoxysilan, Aminopropyltriethoxysilan, Aminobutyltriethoxysilan sowie die entsprechenden Silane, welche als Substituent X eine Glycidyl- oder eine Carboxylgruppe enthalten, wobei Carboxylgruppen insbesondere ganz besonders bevorzugt sind.

Für die Ausrüstung der als Komponente C) einzusetzenden Füllstoffe, vorzugsweise Glasfasern, wird der Haftvermittler, bevorzugt die Silanverbindungen gemäß Formel (I), bevorzugt in Mengen im Bereich von 0,05 bis 2 Gew.-%, besonders bevorzugt in Mengen im Bereich von 0,25 bis 1,5 Gew.-% und ganz besonders bevorzugt in Mengen im Bereich von 0,5 bis 1 Gew.-%, jeweils bezogen auf 100 Gew.-% Komponente C), eingesetzt.

Die als Komponente C) vorzugsweise einzusetzenden Glasfasern können bedingt durch die Verarbeitung zur Zusammensetzung bzw. zum Erzeugnis in der Zusammensetzung bzw. im Erzeugnis kürzer sein, als die ursprünglich eingesetzten Glasfasern. So liegt der mittels hochauflösender Röntgencomputertomographie zu bestimmende arithmetische Mittelwert der Glasfaserlänge nach der Verarbeitung häufig nur noch im Bereich von 150 µm bis 300 µm.

Gemäß **"http://www.r-g.de/wiki/Glasfasern"** werden Glasfasern im Schmelzspinnverfahren (Düsenzieh-, Stabzieh- und Düsenblasverfahren) hergestellt. Beim Düsenziehverfahren fließt unter Ausnutzung der Schwerkraft die heiße Glasmasse durch hunderte Düsenbohrungen einer Platinspinnplatte. Die Elementarfäden können in unbegrenzter Länge mit einer Geschwindigkeit von 3 - 4 km/Minute gezogen werden.

Der Fachmann unterscheidet verschiedene Glasfasersorten, wovon hier beispielsweise einige gelistet sind:
- E-Glas, das meistverwendete Material mit optimalem Preis-Leistungsverhältnis (E-Glas von R&G)
- H-Glas, Hohlglasfasern für reduziertes Gewicht (R&G Glashohlfasergewebe 160 g/m² und 216 g/m²)
- R, S-Glas, für erhöhte mechanische Anforderungen (S2-Glas von R&G)
- D-Glas, Borsilicatglas für erhöhte elektrische Anforderungen
- C-Glas, mit erhöhter chemischer Widerstandsfähigkeit
- Quarzglas, mit hoher Temperaturbeständigkeit

Weitere Beispiele finden sich unter **"http://de.wikipedia.org/wiki/Glasfaser".** Für die Kunststoffverstärkung haben E-Glasfasern die größte Bedeutung erlangt. E steht für Elektro-Glas, da es ursprünglich vor allem in der Elektroindustrie eingesetzt wurde. Für die Produktion von E-Glas werden Glasschmelzen aus reinem Quarz mit Zusätzen aus Kalkstein, Kaolin und Borsäure hergestellt. Sie enthalten neben Siliziumdioxid unterschiedliche Mengen verschiedener Metalloxide. Die Zusammensetzung bestimmt die Eigenschaften der Produkte. Erfindungsgemäß bevorzugt wird wenigstens eine Sorte Glasfasern aus der Gruppe E-Glas, H-Glas, R,S-Glas, D-Glas, C-Glas und Quarzglas eingesetzt, besonders bevorzugt Glasfasern aus E-Glas.

Glasfasern aus E-Glas sind der am weitesten verbreitete Verstärkungswerkstoff. Die Festigkeitseigenschaften entsprechen denen von Metallen (z.B. Alu-Legierungen), wobei das spezifische Gewicht von E-Glasfasern enthaltenden Laminaten niedriger ist, als das der Metalle. E-Glasfasern sind unbrennbar, hitzefest bis ca. 400°C und beständig gegen die meisten Chemikalien und Witterungseinflüsse.

Bevorzugt werden als Komponente C) ferner auch nadelförmige mineralische Füllstoffe eingesetzt. Unter nadelförmigen, mineralischen Füllstoffen wird erfindungsgemäß ein mineralischer Füllstoff mit stark ausgeprägtem nadelförmigen Charakter verstanden. Bevorzugt als Komponente C) einzusetzender nadelförmiger mineralischer Füllstoff ist Wollastonit. Bevorzugt weist der nadelförmige, mineralische Füllstoff ein mittels hochauflösender Röntgencomputertomographie zu bestimmendes Länge : Durchmesser - Verhältnis im Bereich von 2:1 bis 35:1, besonders bevorzugt im Bereich von 3:1 bis 19:1, insbesondere bevorzugt im Bereich von 4:1 bis 12:1 auf. Die mittels hochauflösender Röntgencomputertomographie zu bestimmende mittlere Teilchengröße der nadelförmigen, mineralischen Füllstoffe liegt bevorzugt bei kleiner 20 µm, besonders bevorzugt bei kleiner 15 µm, insbesondere bevorzugt bei kleiner 10 µm.

Bevorzugt wird als Komponente C) aber auch nicht-faserförmiges und nicht-geschäumtes gemahlenes Glas mit einer mittels Laserdiffraktometrie gemäß **ISO 13320** zu bestimmenden Teilchengrößenverteilung mit einem d90 im Bereich von 5 bis 250 µm eingesetzt, bevorzugt mit einem d90 im Bereich von 10 bis 150 µm, besonders bevorzugt mit einem d90 im Bereich von 15 bis 80 µm, ganz besonders bevorzugt mit einem d90 im Bereich von 16 bis 25 µm. Bezüglich der d90-Werte, ihrer Bestimmung und ihrer Bedeutung sei auf Chemie Ingenieur Technik (72) S. 273-276, 3/2000, Wiley-VCH Verlags GmbH, Weinheim, 2000 verwiesen, wonach der d90-Wert diejenige Partikelgröße ist, unterhalb derer 90 % der Partikelmenge liegen.

Erfindungsgemäß bevorzugt ist das nicht-faserförmige und nicht-geschäumte gemahlene Glas von partikelförmiger, nicht zylindrischer Gestalt und hat ein mittels Laserdiffraktometrie gemäß **ISO 13320** zu bestimmendes Längen- zu Dickenverhältnis kleiner 5, bevorzugt kleiner als 3, besonders bevorzugt kleiner 2. Der Wert Null ist selbstverständlich ausgeschlossen.

Das in einer Ausführungsform als Komponente C) besonders bevorzugt einzusetzende nicht-geschäumte und nicht faserförmige gemahlene Glas ist zudem dadurch gekennzeichnet, dass es nicht die für faserförmiges Glas typische Glasgeometrie mit zylindrischem oder ovalen Querschnitt mit einem mittels Laserdiffraktometrie gemäß **ISO 13320** zu bestimmenden Längen- zu Durchmesserverhältnis (L/D-Verhältnis) größer 5 aufweist.

Das in einer Ausführungsform erfindungsgemäß als Komponente C) besonders bevorzugt einzusetzende nicht-geschäumte und nicht-faserförmige gemahlene Glas wird bevorzugt durch Mahlung von Glas mit einer Mühle, bevorzugt einer Kugelmühle und besonders bevorzugt mit anschließender Sichtung bzw. Siebung erhalten. Bevorzugte Edukte für die Vermahlung des in einer Ausführungsform als Komponente C) einzusetzenden nichtfaserförmigem und nicht-geschäumten, gemahlenen Glas sind auch Glasabfälle, wie sie insbesondere bei der Herstellung von Glaserzeugnissen als unerwünschtes Nebenprodukt und / oder als nicht spezifikationsgerechtes Hauptprodukt (sogenannte Offspec-Ware) anfallen. Hierzu gehört insbesondere Abfall-, Recycling- und Bruchglas wie es insbesondere bei der Herstellung von Fenster- oder Flaschenglas, sowie bei der Herstellung von glashaltigen Füll- und Verstärkungsstoffen, insbesondere in Form von sogenannten Schmelzekuchen, anfallen kann. Das Glas kann gefärbt sein, wobei nichtgefärbtes Glas als Ausgangsmaterial zum Einsatz als Komponente C) bevorzugt ist.

### Komponente D)

In bevorzugter Ausführungsform wird als Komponente D) wenigstens ein Flammschutzmittel eingesetzt. Bevorzugte **Flammschutzmittel** sind von Komponente C) verschiedene mineralische Flammschutzmittel, stickstoffhaltige Flammschutzmittel oder phosphorhaltige Flammschutzmittel.

Unter den mineralischen Flammschutzmitteln ist Magnesiumhydroxid besonders bevorzugt. Magnesiumhydroxid [CAS Nr. 1309-42-8] kann aufgrund seiner Herkunft und Herstellungsweise verunreinigt sein. Typische Verunreinigungen sind z.B. Silicium-, Eisen-, Calcium- und/oder Aluminium-haltige Spezies, die beispielsweise in Form von Oxiden in den Magnesiumhydroxid-Kristallen eingelagert sein können. Das als mineralisches Flammschutzmittel einzusetzende Magnesiumhydroxid kann unbeschlichtet oder aber mit einer Schlichte versehen sein. Eine Schlichte fördert qualitätsbeeinflussend den mechanischen Verbund zwischen Kunststoff(matrix) und der mit Schlichte zu versehenden Komponente. Vorzugsweise wird das als mineralisches Flammschutzmittel vorzugsweise einzusetzende Magnesiumhydroxid mit Schlichten auf Basis von Stearaten oder Aminosiloxanen, besonders bevorzugt mit Aminosiloxanen versehen. Vorzugsweise als mineralisches Flammschutzmittel einzusetzendes Magnesiumhydroxid hat eine mittels Laserdiffraktometrie gemäß **ISO 13320** zu bestimmende mittlere Teilchengröße d50 im Bereich von 0,5 µm bis 6 µm, wobei ein d50 im Bereich von 0,7 µm bis 3,8 µm bevorzugt und ein d50 im Bereich von 1,0 µm bis 2,6 µm besonders bevorzugt ist.

Erfindungsgemäß als mineralisches Flammschutzmittel geeignete Magnesiumhydroxidtypen sind beispielsweise Magnifin® H5IV der Martinswerk GmbH, Bergheim, Deutschland oder Hidromag® Q2015 TC der Firma Penoles, Mexiko-Stadt, Mexico.

Bevorzugte stickstoffhaltige Flammschutzmittel sind die Reaktionsprodukte aus Trichlortriazin, Piperazin und Morpholin gemäß CAS Nr. 1078142-02-5, insbesondere MCA PPM Triazin HF der Fa. MCA Technologies GmbH, Biel-Benken, Schweiz, ferner Melamincyanurat und Kondensationsprodukte des Melamins, insbesondere Melem, Melam, Melon bzw. höherkondensierte Verbindungen dieses Typs. Bevorzugte anorganische stickstoffhaltige Verbindungen sind Ammoniumsalze.

Ferner können auch Salze aliphatischer und aromatischer Sulfonsäuren und mineralische Flammschutzadditive, insbesondere Aluminiumhydroxid oder Ca-Mg-Carbonat-Hydrate **(**DE-A 4 236 122**)** eingesetzt werden.

In Frage kommen für den Einsatz als Komponente D) ferner Flammschutzmittelsynergisten aus der Gruppe der sauerstoff- stickstoff- oder schwefelhaltigen Metallverbindungen. Bevorzugt sind dabei zinkfreie Verbindungen, insbesondere Molybdänoxid, Magnesiumoxid, Magnesiumcarbonat, Calciumcarbonat, Calciumoxid, Titannitrid, Magnesiumnitrid, Calciumphosphat, Calciumborat, Magnesiumborat oder deren Mischungen.

In einer alternativen Ausführungsform können als Komponente D) aber auch - sofern es der Bedarf erfordert - zinkhaltige Verbindungen eingesetzt werden. Hierzu zählen bevorzugt Zinkoxid, Zinkborat, Zinkstannat, Zinkhydroxystannat, Zinksulfid und Zinknitrid, oder deren Mischungen.

Bevorzugte phosphorhaltige Flammschutzmittel sind organische Metallphosphinate, Aluminiumsalze der Phosphonsäure, roter Phosphor, anorganische Metallhypophosphite, Metallphosphonate, Derivate der 9,10-Dihydro-9-oxa-10-phosphaphenanthren-10-oxide (DOPO-Derivate), Resorcinol-bis-(diphenylphosphat) (RDP) einschließlich Oligomere, Bisphenol-A-bis-diphenylphosphat (BDP) einschließlich Oligomere, Melaminpyrophosphat, Melaminpolyphosphat, Melamin-poly(aluminiumphosphat), Melamin-poly(zinkphosphat) oder Phenoxyphosphazenoligomere und deren Mischungen.

Ein bevorzugtes organisches Metallphosphinat ist Aluminium-tris(diethylphosphinat). Ein bevorzugtes anorganisches Metallhypophosphit ist Aluminiumhypophosphit.

Weitere als Komponente D) einzusetzende Flammschutzmittel sind Kohlebildner, besonders bevorzugt Phenol-Formaldehydharze, Polycarbonate, Polyimide, Polysulfone, Polyethersulfone oder Polyetherketone sowie Antitropfmittel, insbesondere Tetrafluorethylenpolymerisate.

Die als Komponente D) einzusetzenden Flammschutzmittel können in Reinform, sowie über Masterbatche oder Kompaktate der Komponente A) zugesetzt werden.

In einer alternativen Ausführungsform können als Flammschutzmittel aber auch - sofern der Bedarf es erfordert unter Berücksichtigung der Nachteile durch den Verlust der Halogenfreiheit der Flammschutzmittel - halogenhaltige Flammschutzmittel eingesetzt werden. Bevorzugte halogenhaltige Flammschutzmittel sind handelsübliche organische Halogenverbindungen, besonders bevorzugt Ethylen-1,2-bistetrabromphthalimid, Decabromdiphenylethan, Tetrabrombisphenol-A-epoxyoligomer, Tetrabrombisphenol-A-oligocarbonat, Tetrachlorbisphenol-A-oligocarbonat, Polypentabrombenzylacrylat, bromiertes Polystyrol oder bromierte Polyphenylenether, die alleine oder in Kombination mit Synergisten eingesetzt werden können, wobei unter den halogenhaltigen Flammschutzmitteln bromiertes Polystyrol besonders bevorzugt ist. Bromiertes Polystyrol wird dabei bevorzugt zu 10 - 30 Gew.-%, besonders bevorzugt zu 15 - 25 Gew.% eingesetzt, jeweils bezogen auf die Gesamtzusammensetzung, wobei wenigstens eine der übrigen Komponenten soweit reduziert wird, dass die Summe aller Gewichtsprozente stets 100 ergibt.

In einer weiteren alternativen Ausführungsform können als Flammschutzmittelsynergisten aber auch - sofern der Bedarf es erfordert und unter Berücksichtigung der anfangs beschriebenen Nachteile hinsichtlich der Gefahrenklassifizierung H351 sowie der unter Umständen nachteiligen Auswirkungen auf die Kriechstromfestigkeit - auch Antimontrioxid und Antimonpentoxid eingesetzt werden.

Bromiertes Polystyrol ist in diversen Produktqualitäten kommerziell verfügbar. Beispiele hierfür sind z.B. Firemaster® PBS64 der Fa. Lanxess, Köln, Deutschland sowie Saytex® HP-3010 der Fa. Albemarle, Baton Rouge, USA.

Unter den als Komponente D) einzusetzenden Flammschutzmitteln sind Aluminium-tris(diethylphosphinat)] [CAS Nr. 225789-38-8] sowie die Kombination aus Aluminium-tris(diethylphosphinat) und Melaminpolyphosphat oder die Kombination aus Aluminium-tris(diethylphosphinat) und mindestens einem Aluminiumsalz der Phosphonsäure ganz besonders bevorzugt, wobei letztere Kombination insbesondere bevorzugt ist.

Im Falle der Kombinationen aus Aluminium-tris(diethylphosphinat) und Melaminpolyphosphat bzw. aus Aluminium-tris(diethylphosphinat) und mindestens einem Aluminiumsalz der Phosphonsäure liegt der Anteil an Aluminium-tris(diethylphosphinat) bevorzugt im Bereich von 40 bis 90 Gewichtsteilen, besonders bevorzugt im Bereich von 50 bis 80 Gewichtsteilen, ganz besonders bevorzugt im Bereich von 60 bis 70 Gewichtsteilen, jeweils bezogen auf 100 Gewichtsteile der Kombination aus Aluminium-tris(diethylphosphinat) und Melaminpolyphosphat bzw. der Kombination aus Aluminium-tris(diethylphosphinat) und mindestens einem Aluminiumsalz der Phosphonsäure.

Als Komponente D) einzusetzendes Aluminium-tris(diethylphosphinat) ist dem Fachmann als Exolit® OP1230 oder Exolit® OP1240 der Fa. Clariant International Ltd. Muttenz, Schweiz, bekannt. Melaminpolyphosphat ist in diversen Produktqualitäten kommerziell verfügbar. Beispiele hierfür sind z.B. Melapur® 200/70 der Fa. BASF, Ludwigshafen, Deutschland sowie Budit® 3141 der Fa. Budenheim, Budenheim, Deutschland.

Bevorzugte Aluminiumsalze der Phosphonsäure sind ausgewählt aus der Gruppe primäres Aluminiumphosphonat [Al(H₂PO₃)₃],
basisches Aluminiumphosphonat [Al(OH)H₂PO₃)₂.2H₂O],
Al₂(HPO₃)₃.xAl₂O₃.nH₂O mit x im Bereich von 2,27 bis 1 und n im Bereich von 0 bis 4,
Al₂(HPO₃)₃·(H₂O)_{q} der Formel (II) mit q im Bereich von 0 bis 4, insbesondere Aluminiumphosphonattetrahydrat [Al₂(HPO₃)₃·4H₂O] oder sekundäres Aluminiumphosphonat [Al₂(HPO₃)₃],
Al₂M_{z}(HPO₃)_{y}(OH)ᵥ·(H₂O)_{w} der Formel (III) worin M Alkalimetallion(en) bedeutet und z im Bereich von 0,01 bis 1,5, y im Bereich von 2,63 - 3,5, v im Bereich von 0 bis 2 und w im Bereich von 0 bis 4 liegt, und
Al₂(HPO₃)ᵤ(H₂PO₃)ₜ · (H₂O)ₛ der Formel (IV), worin u im Bereich von 2 bis 2,99, t im Bereich von 2 bis 0,01 und s im Bereich von 0 bis 4 liegt,
wobei in Formel (III) z, y und v sowie in Formel (IV) u und t nur solche Zahlen annehmen können, dass das entsprechende Aluminiumsalz der Phosphonsäure als Ganzes ungeladen ist.

Bevorzugte Alkalimetalle M in Formel (III) sind Natrium und Kalium.

Die beschriebenen Aluminiumsalze der Phosphonsäure können dabei einzeln oder im Gemisch eingesetzt werden.

Besonders bevorzugte Aluminiumsalze der Phosphonsäure werden ausgewählt aus der Gruppe
primäres Aluminiumphosphonat [Al(H₂PO₃)₃],
sekundäres Aluminiumphosphonat [Al₂(HPO₃)₃],
basisches Aluminiumphosphonat [Al(OH)H₂PO₃)₂·2H₂O],
Aluminiumphosphonattetrahydrat [Al₂(HPO₃)₃·4H₂O] und
Al₂(HPO₃)₃·x Al₂O₃·n H₂O mit x im Bereich von 2,27 bis 1 und n im Bereich von 0 bis 4.

Ganz besonders bevorzugt sind sekundäres Aluminiumphosphonat Al₂(HPO₃)₃ [CAS Nr. 71449-76-8] und sekundäres Aluminiumphosphonattetrahydrat Al₂(HPO₃)₃·4H₂O [CAS Nr. 156024-71-4], insbesondere bevorzugt ist sekundäres Aluminiumphosphonat Al₂(HPO₃)₃.

Die Herstellung erfindungsgemäß als Komponente D) einzusetzender Aluminiumsalze der Phosphonsäure ist zum Beispiel in WO 2013/083247 A1 beschrieben. Sie erfolgt üblicherweise durch Umsetzung einer Aluminiumquelle, bevorzugt Aluminiumisopropoxid, Aluminiumnitrat, Aluminiumchorid oder Aluminiumhydroxid, mit einer Phosphorquelle, bevorzugt Phosphonsäure, Ammoniumphosphonat, Alkaliphosphonat, und wahlweise mit einem Templat in einem Lösungsmittel bei 20 bis 200°C während einer Zeitspanne von bis zu 4 Tagen. Aluminiumquelle und Phosphorquelle werden dazu vermischt, unter hydrothermalen Bedingungen oder unter Rückfluss erhitzt, abfiltriert gewaschen und getrocknet. Bevorzugte Template dabei sind 1,6 Hexandiamin, Guanidincarbonat oder Ammoniak. Bevorzugtes Lösungsmittel ist Wasser.

### Komponente E)

Als Komponente E) wird wenigstens ein weiteres, von den Komponenten B) bis D) unterschiedliches **Additiv** eingesetzt. Bevorzugte als Komponente E) einzusetzende Additive sind Antioxidantien, Thermostabilisatoren, UV-Stabilisatoren, Gammastrahlenstabilisatoren, Komponenten zur Verringerung der Wasseraufnahme bzw. Hydrolysestabilisatoren, Antistatika, Emulgatoren, Nukleierungsmittel, Weichmacher, Verarbeitungshilfsmittel, Schlagzähmodifikatoren, Gleit- und/oder Entformungsmittel, Komponenten zur Verringerung der Wasseraufnahme, Fließhilfsmittel oder Elastomermodifikatoren. kettenverlängernd wirkende Additive, von Komponenten B) verschiedene Farbmittel, und soweit es der Bedarf erfordert, weitere Laserabsorber. Die Additive können alleine oder in Mischung bzw. in Form von Masterbatchen eingesetzt werden.

Bevorzugte **Thermostabilisatoren** der Komponente E) sind sterisch gehinderte Phenole, insbesondere solche enthaltend mindestens eine 2,6-Di-tert.-butylphenyl-Gruppe und/oder 2-tert.-Butyl-6-methylphenyl-Gruppe, ferner Phosphite, Hypophosphite, insbesondere Natriumhypophosphit NaH₂PO₂ Hydrochinone, aromatische sekundäre Amine, substituierte Resorcine, Salicylate, Benzotriazole und Benzophenone, 3,3'-Thiodipropionsäureester sowie verschieden substituierte Vertreter dieser Gruppen oder deren Mischungen.

In einer Ausführungsform können als Thermostabilisatoren der Komponente E) auch Kupfersalze, vorzugsweise in Kombination mit Natriumhypophosphit NaH₂PO₂ eingesetzt werden. Bevorzugt wird als Kupfersalz Kupfer(l)iodid [CAS Nr. 7681-65-4] und/oder Kupfer(triphenylphosphino)iodid [CAS Nr. 47107-74-4] eingesetzt. Vorzugsweise werden die Kupfersalze in Kombination mit Natriumhypophosphit NaH₂PO₂ oder mit wenigstens einem Alkaliiodid eingesetzt. Bevorzugtes Alkaliiodid ist Kaliumiodid [CAS Nr. 7681-11-0].

Als Komponente E) einzusetzende Thermostabilisatoren werden vorzugsweise zu 0,01 bis 2 Massenanteilen, besonders bevorzugt zu 0,05 bis 1 Massenanteilen, jeweils bezogen auf 100 Massenanteile der Komponente A) eingesetzt.

Als Komponente E) einzusetzende **UV-Stabilisatoren** werden vorzugsweise substituierte Resorcine, Salicylate, Benzotriazole und Benzophenone, HALS-Derivate ("Hindered Amine Light Stabilizers") enthaltend mindestens eine 2,2,6,6-Tetramethyl-4-piperidyl-Einheit oder Benzophenone eingesetzt.

Als Komponente E) einzusetzende UV-Stabilisatoren werden vorzugsweise zu 0,01 bis 2 Massenanteilen, besonders bevorzugt zu 0,1 bis 1 Massenanteilen, jeweils bezogen auf 100 Massenanteile der Komponente A) eingesetzt.

Als Komponente E) einzusetzende und von Komponente B) verschiedene **Farbmittel** werden in einer Ausführungsform bevorzugt anorganische Pigmente eingesetzt, besonders bevorzugt Ultramarinblau, Bismutvanadat [CAS Nr. 14059-33-7], Eisenoxid [CAS Nr. 1309-37-1], Titandioxid [CAS Nr. 13463-67-7 (Rutil) oder CAS Nr. 1317-70-0 (Anatas)], Bariumsulfat [CAS Nr. 7727-43-7], Zinksulfid [CAS Nr. 1314-98-3] oder Zinn-Titan-Zinkoxide [CAS Nr. 923954-49-8], insbesondere bevorzugt Bariumsulfat.

Als Komponente E) einzusetzende und von Komponente B) verschiedene **Farbmittel** werden in einer Ausführungsform bevorzugt organische Farbmittel eingesetzt, besonders bevorzugt Phthalocyanine, Chinacridone, Benzimidazole, insbesondere Ni-2-hydroxy-napthyl-benzimidazol [CAS Nr. 42844-93-9] und/oder Pyrimidin-azo-benzimidazol [CAS-Nr. 72102-84-2] und/oder Pigment Yellow 192 [CAS Nr. 56279-27-7], außerdem Perylene, Anthrachinone, insbesondere C.I. Solvent Yellow 163 [CAS Nr. 13676-91-0].

Die aufgeführte Aufzählung als Komponente E) einzusetzender anorganischer oder organischer Farbmittel ist nicht abschließend.

In einer Ausführungsform kann, soweit es der Bedarf erfordert, als Farbmittel Ruß oder Nigrosin eingesetzt werden.

In einer bevorzugten Ausführungsform wird für Komponente E) Titandioxid als Farbmittel Titanweiß, auch als Pigment White 6 oder CI 77891 bezeichnet, eingesetzt.

Als Komponente E) einzusetzende **Nukleierungsmittel** werden bevorzugt Natrium- oder Calciumphenylphosphinat, Aluminiumoxid oder Siliziumdioxid sowie ganz besonders bevorzugt Talkum eingesetzt, wobei diese Aufzählung nicht abschließend ist.

Als Komponente E) einzusetzende **Fließhilfsmittel** werden bevorzugt Copolymerisate aus mindestens einem α-Olefin mit mindestens einem Methacrylsäurester oder Acrylsäureester eines aliphatischen Alkohols eingesetzt. Besonders bevorzugt sind dabei Copolymerisate, bei denen das α-Olefin aus Ethen und/oder Propen aufgebaut ist und der Methacrylsäurester oder Acrylsäureester als Alkoholkomponente lineare oder verzweigte Alkylgruppen mit 6 bis 20C-Atomen enthält. Ganz besonders bevorzugt ist Acrylsäure-(2-ethyl)-hexylester. Als Fließhilfsmittel geeignete Copolymerisate zeichnen sich neben der Zusammensetzung auch durch das niedrige Molekulargewicht aus. Dementsprechend sind für die erfindungsgemäß vor thermischem Abbau zu bewahrenden Polymerzusammensetzungen vor allem Copolymerisate geeignet, die einen MFI-Wert gemessen bei 190°C und einer Belastung von 2,16 kg von mindestens 100g /10min, bevorzugt von mindestens 150g/10min, besonders bevorzugt von mindestens 300 g / 10 min aufweisen. Der MFI, Melt-Flow-Index, dient zur Charakterisierung des Flusses einer Schmelze eines Thermoplasten und unterliegt den Normen **ISO 1133** oder **ASTM D 1238.** Insbesondere bevorzugt wird als Fließhilfsmittel ein Copolymerisat aus Ethen und Acrylsäure-(2-ethyl)-hexylester mit MFI 550 eingesetzt, bekannt als Lotryl® 37EH550.

Als Komponente E) einzusetzende **kettenverlängernde Additive** werden bevorzugt di- oder mehrfunktionelle verzweigend oder kettenverlängernd wirkende Additive, enthaltend mindestens zwei verzweigend oder kettenverlängernd wirkende funktionelle Gruppen pro Molekül, eingesetzt. Als verzweigende bzw. kettenverlängende Additive werden niedermolekulare oder oligomere Verbindungen bevorzugt, die über mindestens zwei kettenverlängernd wirkende funktionelle Gruppen pro Molekül verfügen, welche mit primären und/oder sekundären Aminogruppen, und/oder Amidgruppen und/oder Carbonsäuregruppen reagieren können. Kettenverlängernd wirkende funktionelle Gruppen sind bevorzugt Isocyanate, Alkohole, blockierte Isocyanate, Epoxide, Maleinsäureanhydrid, Oxazoline, Oxazine, Oxazolone, wobei Epoxide bevorzugt sind.

Insbesondere bevorzugte di- oder mehrfunktionelle verzweigend oder kettenverlängernd wirkende Additive sind Diepoxide auf Basis Diglycidylether (Bisphenol und Epichlorhydrin), auf Basis von Aminepoxidharz (Anilin und Epichlorhydrin), auf Basis von Diglycidylester (cycloaliphatische Dicarbonsäuren und Epichlorhydrin) einzeln oder in Mischungen sowie 2,2-Bis[p-hydroxy-phenyl]-propan-diglycidylether, Bis-[p-(N-methyl-N-2,3-epoxy-propylamino)-phenyl]-methan sowie epoxidierte Fettsäureester des Glycerins, enthaltend mindestens zwei Epoxidgruppen pro Molekül.

Besonders bevorzugte di- oder mehrfunktionelle verzweigend oder kettenverlängernd wirkende Additive sind Glycidylether, ganz besonders bevorzugt Bisphenol A-Diglycidylether [CAS Nr. 98460-24-3] oder epoxidierte Fettsäureester des Glycerins, sowie auch ganz besonders bevorzugt epoxidiertes Sojaöl [CAS Nr. 8013-07-8] und/oder epoxidiertes Leinöl.

Bevorzugt als Komponente E) einzusetzende **Weichmacher** sind Phthalsäuredioctylester, Phthalsäuredibenzylester, Phthalsäurebutylbenzylester, Kohlenwasserstofföle oder N-(n-Butyl)benzolsulfonamid.

Bevorzugt als Komponente E) einzusetzende **Elastomermodifikatoren** umfassen u.a. ein oder mehrere Pfropfpolymerisate von
- E.1: 5 bis 95 Gew.-%, vorzugsweise 30 bis 90 Gew.-%, wenigstens eines Vinylmonomeren und
- E.2: 95 bis 5 Gew.-%, vorzugsweise 70 bis 10 Gew.-% einer oder mehrerer Pfropfgrundlagen mit Glasübergangstemperaturen < 10°C, vorzugsweise < 0°C, besonders bevorzugt < -20°C, wobei die Gewichtsprozente sich auf 100 Gew.-% Elastomermodifikator beziehen.

Die Pfropfgrundlage E.2 hat im allgemeinen eine mittels Laserdiffraktometrie gemäß **ISO** 13320 zu bestimmende mittlere Teilchengröße d50-Wert im Bereich von 0,05 bis 10 µm, vorzugsweise im Bereich von 0,1 bis 5 µm, besonders bevorzugt im Bereich von 0,2 bis 1 µm.

Monomere zu E.1 sind vorzugsweise Gemische aus
- E.1.1: 50 bis 99 Gew.-% Vinylaromaten und/oder kernsubstituierten Vinylaromaten, insbesondere Styrol, α-Methylstyrol, p-Methylstyrol, p-Chlorstyrol, und/oder Methacrylsäure-(C₁-C₈)-Alkylester, insbesondere. Methylmethacrylat, Ethylmethacrylat) und
- E.1.2: 1 bis 50 Gew.-% Vinylcyanide, insbesondere ungesättigte Nitrile wie Acrylnitril und Methacrylnitril, und/oder (Meth)Acrylsäure-(C₁-C₈)-alkylester, insbesondere Methylmethacrylat, Glycidylmethacrylat, n-Butylacrylat, t-Butylacrylat, und/oder Derivate ,insbesondere Anhydride und Imide ungesättigter Carbonsäuren, insbesondere Maleinsäureanhydrid oder N-Phenyl-Maleinimid, wobei die Gewichtsprozente sich auf 100 Gew.-% Elastomermodifikator beziehen.

Bevorzugte Monomere E.1.1 sind auszuwählen aus mindestens einem der Monomere Styrol, α-Methylstyrol und Methylmethacrylat, bevorzugte Monomere E.1.2 sind ausgewählt aus mindestens einem der Monomere Acrylnitril, Maleinsäureanhydrid, Glycidylmethacrylat und Methylmethacrylat. Besonders bevorzugte Monomere sind E.1.1 Styrol und E.1.2 Acrylnitril.

Für die in den Elastomermodifikatoren einzusetzenden Pfropfpolymerisate geeignete Pfropfgrundlagen E.2 sind beispielsweise Dienkautschuke, EPDM-Kautschuke, also solche auf Basis Ethylen/Propylen und gegebenenfalls Dien, ferner Acrylat-, Polyurethan-, Silikon-, Chloropren und Ethylen/Vinylacetat-Kautschuke. EPDM steht für Ethylen-Propylen-Dien-Kautschuk.

Bevorzugte Pfropfgrundlagen E.2 sind Dienkautschuke, insbesondere auf Basis Butadien, Isopren etc. oder Gemische von Dienkautschuken oder Copolymerisate von Dienkautschuken oder deren Gemischen mit weiteren copolymerisierbaren Monomeren, insbesondere gemäß E.1.1 und E.1.2, mit der Maßgabe, dass die Glasübergangstemperatur der Komponente E.2 bei <10°C, vorzugsweise bei <0°C, besonders bevorzugt bei <-10°C liegt.

Besonders bevorzugte Propfgrundlagen E.2 sind ABS-Polymerisate (Emulsions-, Masse- und Suspensions-ABS) wobei ABS für Acrylnitril-Butadien-Styrol steht, wie sie z. B. in der DE-A 2 035 390 oder in der DE-A 2 248 242 bzw. in Ullmann, Enzyklopädie der Technischen Chemie, Bd. 19 (1980), S. 277 - 295 beschrieben sind. Der Gelanteil der Pfropfgrundlage E.2 beträgt bevorzugt mindestens 30 Gew.-%, besonders bevorzugt mindestens 40 Gew.-% (in Toluol gemessen).

Die als Komponente E) einzusetzenden Elastomermodifikatoren bzw. Pfropfpolymerisate werden durch radikalische Polymerisation, bevorzugt durch Emulsions-, Suspensions-, Lösungs- oder Massepolymerisation, insbesondere durch Emulsions- oder Massepolymerisation hergestellt.

Besonders geeignete Pfropfkautschuke sind auch ABS-Polymerisate, die durch Redox-Initiierung mit einem Initiatorsystem aus organischem Hydroperoxid und Ascorbinsäure gemäß US-A 4 937 285 hergestellt werden.

Da bei der Pfropfreaktion die Pfropfmonomeren bekanntlich nicht unbedingt vollständig auf die Pfropfgrundlage aufgepfropft werden, werden erfindungsgemäß unter Pfropfpolymerisaten auch solche Produkte verstanden, die durch (Co)Polymerisation der Pfropfmonomere in Gegenwart der Pfropfgrundlage gewonnen werden und bei der Aufarbeitung mit anfallen.

Ebenfalls geeignete Acrylatkautschuke basieren auf Pfropfgrundlagen E.2 die vorzugsweise Polymerisate aus Acrylsäurealkylestern, gegebenenfalls mit bis zu 40 Gew.-%, bezogen auf E.2 anderen polymerisierbaren, ethylenisch ungesättigten Monomeren. Zu den bevorzugten polymerisierbaren Acrylsäureestern gehören C₁-C₈-Alkylester, vorzugsweise Methyl-, Ethyl-, Butyl-, n-Octyl- und 2-Ethylhexylester; Halogenalkylester, vorzugsweise Halogen-C₁-C₈-alkyl-ester, wie Chlorethylacrylat, Glycidylester sowie Mischungen dieser Monomeren. Dabei sind Propfpolymerisate mit Butylacrylat als Kern und Methylmethacrylaten als Schale, insbesondere Paraloid® EXL2300, Fa. Dow Corning Corporation, Midland, Michigan, USA, besonders bevorzugt.

Zur Vernetzung können alternativ zu den ethylenisch ungesättigten Monomeren Monomere mit mehr als einer polymerisierbaren Doppelbindung copolymerisiert werden. Bevorzugte vernetzende Monomere sind Ester ungesättigter Monocarbonsäuren mit 3 bis 8 C-Atomen und ungesättigter einwertiger Alkohole mit 3 bis 12 C-Atomen, oder gesättigter Polyole mit 2 bis 4 OH-Gruppen und 2 bis 20 C-Atomen, bevorzugt Ethylenglykoldimethacrylat, Allylmethacrylat; mehrfach ungesättigte heterocyclische Verbindungen, bevorzugt Trivinyl- und Triallylcyanurat; polyfunktionelle Vinylverbindungen, bevorzugt Di- und Trivinylbenzole; aber auch Triallylphosphat und Diallylphthalat.

Besonders bevorzugte vernetzende Monomere sind Allylmethacrylat, Ethylenglykoldimethacrylat, Diallylphthalat und heterocyclische Verbindungen, die mindestens 3 ethylenisch ungesättigte Gruppen aufweisen.

Ganz besonders bevorzugte vernetzende Monomere sind die cyclischen Monomere Triallylcyanurat, Triallylisocyanurat, Triacryloylhexahydro-s-triazin, Triallylbenzole. Die Menge der vernetzten Monomere beträgt vorzugsweise 0,02 bis 5 Gew.-%, insbesondere 0,05 bis 2 Gew.-%, bezogen auf die Pfropfgrundlage E.2.

Bei cyclischen vernetzenden Monomeren mit mindestens 3 ethylenisch ungesättigten Gruppen ist es vorteilhaft, die Menge auf unter 1 Gew.-% der Pfropfgrundlage E.2 zu beschränken.

Bevorzugte "andere" polymerisierbare, ethylenisch ungesättigte Monomere, die neben den Acrylsäureestern gegebenenfalls zur Herstellung der Pfropfgrundlage E.2 dienen können, sind Acrylnitril, Styrol, α-Methylstyrol, Acrylamide, Vinyl-C₁-C₆-alkylether, Methylmethacrylat, Glycidylmethacrylat, Butadien. Bevorzugte Acrylatkautschuke als Pfropfgrundlage E.2 sind Emulsionspolymerisate, die einen Gelgehalt von mindestens 60 Gew.-% aufweisen.

Weitere bevorzugt geeignete Pfropfgrundlagen gemäß E.2 sind Silikonkautschuke mit pfropfaktiven Stellen, wie sie in den DE-A 3 704 657**,** DE-A 3 704 655**,** DE-A 3 631 540 und DE-A 3 631 539 beschrieben werden.

Bevorzugte Propfpolymerisate mit einem Silikonanteil sind solche, die Methylmethacrylat oder Styrol-Acrylnitril als Schale und ein Silikon/Acrylat-Propf als Kern aufweisen. Bevorzugt als Schale einzusetzendes Styrol-Acrylnitril ist Metablen® SRK200. Bevorzugt als Schale einzusetzendes Methylmethacrylat ist Metablen® S2001 oder Metablen® S2030 oder Metablen® SX-005. Besonders bevorzugt wird Metablen® S2001 eingesetzt. Die Produkte mit dem Handelsnamen Metablen® sind erhältlich bei Mitsubishi Rayon Co., Ltd., Tokio, Japan.

Zur Vernetzung können Monomere mit mehr als einer polymerisierbaren Doppelbindung copolymerisiert werden. Bevorzugte Beispiele für vernetzende Monomere sind Ester ungesättigter Monocarbonsäuren mit 3 bis 8 C-Atomen und ungesättigter einwertiger Alkohole mit 3 bis 12 C-Atomen, oder gesättigter Polyole mit 2 bis 4 OH-Gruppen und 2 bis 20 C-Atomen, bevorzugt Ethylenglykoldimethacrylat, Allylmethacrylat; mehrfach ungesättigte heterocyclische Verbindungen, bevorzugt Trivinyl- und Triallylcyanurat; polyfunktionelle Vinylverbindungen, bevorzugt Di- und Trivinylbenzole; aber auch Triallylphosphat und Diallylphthalat.

Bevorzugte vernetzende Monomere sind Allylmethacrylat, Ethylenglykoldimethacrylat, Diallylphthalat und heterocyclische Verbindungen, die mindestens 3 ethylenisch ungesättigte Gruppen aufweisen.

Besonders bevorzugte vernetzende Monomere sind die cyclischen Monomere Triallylcyanurat, Triallylisocyanurat, Triacryloylhexahydro-s-triazin, Triallylbenzole. Die Menge der vernetzten Monomere beträgt vorzugsweise 0,02 bis 5 Gew.-%, insbesondere 0,05 bis 2 Gew.-%, bezogen auf die Pfropfgrundlage E.2.

Bei cyclischen vernetzenden Monomeren mit mindestens 3 ethylenisch ungesättigten Gruppen ist es vorteilhaft, die Menge auf unter 1 Gew.-% der Pfropfgrundlage E.2 zu beschränken.

Bevorzugte "andere" polymerisierbare, ethylenisch ungesättigte Monomere, die neben den Acrylsäureestern gegebenenfalls zur Herstellung der Pfropfgrundlage E.2 dienen können, sind Acrylnitril, Styrol, α-Methylstyrol, Acrylamide, Vinyl-C₁-C₆-alkylether, Methylmethacrylat, Glycidylmethacrylat, Butadien. Bevorzugte Acrylatkautschuke als Pfropfgrundlage E.2 sind Emulsionspolymerisate, die einen Gelgehalt von mindestens 60 Gew.-% aufweisen.

Neben Elastomermodifikatoren, die auf Propfpolymeren beruhen, können ebenfalls nicht auf Propfpolymeren basierende Elastomermodifikatoren eingesetzt werden, die Glasübergangstemperaturen < 10°C, vorzugsweise < 0°C, besonders bevorzugt < -20°C aufweisen. Bevorzugt gehören hierzu Elastomere mit einer Blockcopolymerstruktur sowie weiterhin thermoplastisch aufschmelzbare Elastomere, insbesondere EPM-, EPDM- und/oder SEBS-Kautschuke (EPM = Ethylen-Propylen-Copolymer, EPDM = Ethylen-Propylen-Dien-Kautschuk und SEBS = Styrol-Ethen-Buten-Styrol Copolymer).

Als Komponente E) einzusetzende **Gleit- und/oder Entformungsmittel** sind bevorzugt langkettige Fettsäuren, insbesondere Stearinsäure oder Behensäure, deren Salze, insbesondere Ca- oder Zn-Stearat, sowie deren Esterderivate, insbeonsere solche auf Basis von Pentaerythritol, insbesondere Fettsäureester des Pentaerythritols oder Amidderivate, insbesondere Ethylen-bis-stearylamid, Montanwachse sowie niedermolekulare Polyethylen- bzw. Polypropylenwachse.

Montanwachse im Sinne der vorliegenden Erfindung sind Mischungen aus geradkettigen, gesättigten Carbonsäuren mit Kettenlängen im Bereich von 28 bis 32 C-Atomen.

Erfindungsgemäß werden besonders bevorzugt Gleit- und/oder Entformungsmittel aus der Gruppe der Ester gesättigter oder ungesättigter aliphatischer Carbonsäuren mit 8 bis 40 C-Atomen mit aliphatischen gesättigten Alkoholen oder Amide von Aminen mit 2 bis 40 C-Atomen mit ungesättigten aliphatischen Carbonsäuren mit 8 bis 40 C-Atomen bzw. statt jeweils der Carbonsäuren Metallsalze gesättigter oder ungesättigter aliphatischer Carbonsäuren mit 8 bis 40 C-Atomen eingesetzt.

Ganz besonders bevorzugt als Komponente E) einzusetzende Gleit- und/oder Entformungsmittel sind auszuwählen aus der Gruppe Pentaerythritoltetrastearat [CAS Nr. 115-83-3], Ethylen-bis-stearylamid, Calciumstearat und Ethylenglycoldimontanat. Insbesondere bevorzugt wird Calciumstearat [CAS Nr. 1592-23-0] oder Ethylen-bis-stearylamid [CAS Nr. 110-30-5] eingesetzt. Insbesondere besonders bevorzugt wird Ethylen-bis-stearylamid (Loxiol® EBS von Emery Oleochemicals) eingesetzt.

Als Komponente E) bevorzugt einzusetzende **Hydrolysestabilisatoren** bzw. **Komponenten zur Verringerung der Wasseraufnahme** sind bevorzugt Polyester, wobei Polybutylenterepthalat und/oder Polyethylenterephthalat bevorzugt sind und Polyethylenterephthalat ganz besonders bevorzugt ist. Die Polyester werden dabei bevorzugt in Konzentrationen von 5 bis 20 Gew.-% und besonders bevorzugt in Konzentrationen von 7 bis 15 Gew-% eingesetzt, jeweils bezogen auf die gesamte Polymerzusammensetzung und mit der Maßgabe, dass die Summe aller Gewichtsprozente der Polymerzusammensetzung stets 100 Gew.-% ergibt.

Als Komponente E) bevorzugt einzusetzende **Laserabsorber** werden ausgewählt aus der Gruppe Zinnoxid, Zinnorthophosphat, Bariumtitanat, Aluminiumoxid, Kupferhydroxyphosphat, Kupferorthophosphat, Kaliumkupferdiphosphat, Kupferhydroxid, Bismuttrioxid und Antrachinon. Besonders bevorzugt ist Zinnoxid.

In einer alternativen Ausführungsform kann als Laserabsorber aber auch - sofern der Bedarf es erfordert unter Berücksichtigung der anfangs beschriebenen Nachteile hinsichtlich der Gefahrenklassifizierung H351 und der nachteiligen Auswirkungen auf die Kriechstromfestigkeit - auch Antimonzinnoxid, Antimontrioxid oder Antimonpentoxid eingesetzt werden.

Der Laserabsorber kann direkt als Pulver oder in Form von Masterbatchen eingesetzt werden. Bevorzugte Masterbatche sind solche auf Basis von Polyester und/oder Polyolefinen, bevorzugt Polyethylen. Der Laserabsorber kann einzeln oder als Gemisch mehrerer Laserabsorber eingesetzt werden.

Laserabsorber können Laserlicht einer bestimmten Wellenlänge absorbieren. In der Praxis liegt diese Wellenlänge im Bereich von 157 nm bis 10,6 µm. Beispiele für Laser dieser Wellenlängen sind in WO2009/003976 A1 beschrieben. Bevorzugt werden Nd:YAG Laser, mit denen Wellenlängen von 1064, 532, 355 und 266 nm realisiert werden können, und CO₂-Laser eingesetzt.

Erfindungsgemäß bevorzugt sind Hochvoltkomponenten, insbesondere Hochvoltkomponenten für die Elektromobilität, basierend auf Polymerzusammensetzungen enthaltend
A) auf 100 Massenanteile wenigstens eines Polyesters, vorzugsweise C₂-C₁₀-Polyalkylenterephthalat oder Polycarbonat, insbesondere PBT,
B) 0,01 bis 5 Massenanteile wenigstens eines Sulfids enthaltend Cer, und
C) 1 bis 150 Massenanteile wenigstens eines Füllstoffs oder Verstärkungsstoffs auszuwählen aus der Gruppe Glaskugeln oder Voll- oder Hohlglaskugeln, oder Glasfasern, oder gemahlenes Glas, amorphes Quarzglas, Aluminium-Borsilikatglas mit einem Alkaligehalt 1% (E-Glas), amorphe Kieselsäure, Quarzmehl, Calciumsilicat, Calciummetasilicat, Magnesiumcarbonat, Kaolin, calciniertes Kaolin, Kreide, Kyanit, gepulverter oder gemahlener Quarz, Glimmer, Phlogopit, Bariumsulfat, Feldspat, Wollastonit, Montmorillonit, Pseudoböhmit der Formel AIO(OH), Magnesiumcarbonat und Talkum, insbesondere Glasfasern,
mit der Maßgabe, dass die Hochvoltkomponenten oder Hochvoltkomponenten für die Elektromobilität im RAL-Farbsystem der Farbnummer RAL2003, RAL2004, RAL2007, RAL2008, RAL2009, RAL2010 oder RAL2011 entsprechen, besonders bevorzugt den Farbnummern RAL2003, RAL2004, RAL2008 oder RAL2009, ganz besonders bevorzugt der Farbnummer RAL 2003.

Erfindungsgemäß bevorzugt sind Hochvoltkomponenten, insbesondere Hochvoltkomponenten für die Elektromobilität, basierend auf Polymerzusammensetzungen enthaltend
A) auf 100 Massenanteile wenigstens eines Polyesters, vorzugsweise C₂-C₁₀-Polyalkylenterephthalat oder Polycarbonat, insbesondere PBT,
B) 0,01 bis 5 Massenanteile wenigstens eines Sulfids enthaltend Cer, und
C) 0,01 bis 2 Massenanteile wenigstens Titandioxid,
mit der Maßgabe, dass die Hochvoltkomponenten oder Hochvoltkomponenten für die Elektromobilität im RAL-Farbsystem der Farbnummer RAL2003, RAL2004, RAL2007, RAL2008, RAL2009, RAL2010 oder RAL2011 entsprechen, besonders bevorzugt den Farbnummern RAL2003, RAL2004, RAL2008 oder RAL2009, ganz besonders bevorzugt der Farbnummer RAL 2003.

Erfindungsgemäß bevorzugt sind Hochvoltkomponenten, insbesondere Hochvoltkomponenten für die Elektromobilität, basierend auf Polymerzusammensetzungen enthaltend
A) auf 100 Massenanteile wenigstens eines Polyesters, vorzugsweise C₂-C₁₀-Polyalkylenterephthalat oder Polycarbonat, insbesondere PBT,
B) 0,01 bis 5 Massenanteile wenigstens Cer(III)sulfid (Ce₂S₃) oder Cer(III)sulfid / Lanthan(III)sulfid, und
C) 0,01 bis 2 Massenanteile wenigstens Titandioxid,
mit der Maßgabe, dass die Hochvoltkomponenten oder Hochvoltkomponenten für die Elektromobilität im RAL-Farbsystem der Farbnummer RAL2003, RAL2004, RAL2007, RAL2008, RAL2009, RAL2010 oder RAL2011 entsprechen, besonders bevorzugt den Farbnummern RAL2003, RAL2004, RAL2008 oder RAL2009, ganz besonders bevorzugt der Farbnummer RAL 2003.Erfindungsgemäß besonders bevorzugt sind Hochvoltkomponenten, insbesondere Hochvoltkomponenten für die Elektromobilität, basierend auf Polymerzusammensetzungen enthaltend
A) auf 100 Massenanteile wenigstens eines Polyesters, vorzugsweise C₂-C₁₀-Polyalkylenterephthalat oder Polycarbonat, insbesondere PBT,
B) 0,01 bis 5 Massenanteile wenigstens Cer(III)sulfid (Ce₂S₃) oder Cer(III)sulfid / Lanthan(III)sulfid, und
C) 1 bis 150 Massenanteile wenigstens eines Füllstoffs oder Verstärkungsstoffs auszuwählen aus der Gruppe Glaskugeln oder Voll- oder Hohlglaskugeln, oder Glasfasern, oder gemahlenes Glas, amorphes Quarzglas, Aluminium-Borsilikatglas mit einem Alkaligehalt 1% (E-Glas), amorphe Kieselsäure, Quarzmehl, Calciumsilicat, Calciummetasilicat, Magnesiumcarbonat, Kaolin, calciniertes Kaolin, Kreide, Kyanit, gepulverter oder gemahlener Quarz, Glimmer, Phlogopit, Bariumsulfat, Feldspat, Wollastonit, Montmorillonit, Pseudoböhmit der Formel AIO(OH), Magnesiumcarbonat und Talkum, insbesondere Glasfasern,
mit der Maßgabe, dass die Hochvoltkomponenten oder Hochvoltkomponenten für die Elektromobilität im RAL-Farbsystem der Farbnummer RAL2003, RAL2004, RAL2007, RAL2008, RAL2009, RAL2010 oder RAL2011 entsprechen, besonders bevorzugt den Farbnummern RAL2003, RAL2004, RAL2008 oder RAL2009, ganz besonders bevorzugt der Farbnummer RAL 2003.

Erfindungsgemäß bevorzugt sind Hochvoltkomponenten, insbesondere Hochvoltkomponenten für die Elektromobilität, basierend auf Polymerzusammensetzungen enthaltend
A) auf 100 Massenanteile wenigstens eines Polyesters, vorzugsweise C₂-C₁₀-Polyalkylenterephthalat oder Polycarbonat, insbesondere PBT,
B) 0,01 bis 5 Massenanteile wenigstens eines Sulfids enthaltend Cer,
C) 1 bis 150 Massenanteile wenigstens eines Füllstoffstoffs oder Verstärkungsstoffs, vorzugsweise auszuwählen aus der Gruppe Glaskugeln oder Voll- oder Hohlglaskugeln, oder Glasfasern, oder gemahlenes Glas, amorphes Quarzglas, Aluminium-Borsilikatglas mit einem Alkaligehalt 1% (E-Glas), amorphe Kieselsäure, Quarzmehl, Calciumsilicat, Calciummetasilicat, Magnesiumcarbonat, Kaolin, calciniertes Kaolin, Kreide, Kyanit, gepulverter oder gemahlener Quarz, Glimmer, Phlogopit, Bariumsulfat, Feldspat, Wollastonit, Montmorillonit, Pseudoböhmit der Formel AIO(OH), Magnesiumcarbonat und Talkum, insbesondere Glasfasern, und
D) 3 bis 100 Massenanteile wenigstens eines Flammschutzadditivs, vorzugsweise auszuwählen aus mineralischen Flammschutzmitteln, stickstoffhaltigen Flammschutzmitteln oder phosphorhaltigen Flammschutzmitteln,
mit der Maßgabe, dass die Hochvoltkomponenten oder Hochvoltkomponenten für die Elektromobilität im RAL-Farbsystem der Farbnummer RAL2003, RAL2004, RAL2007, RAL2008, RAL2009, RAL2010 oder RAL2011 entsprechen, besonders bevorzugt den Farbnummern RAL2003, RAL2004, RAL2008 oder RAL2009, ganz besonders bevorzugt der Farbnummer RAL 2003.

Erfindungsgemäß besonders bevorzugt sind Hochvoltkomponenten, insbesondere Hochvoltkomponenten für die Elektromobilität, basierend auf Polymerzusammensetzungen enthaltend
A) auf 100 Massenanteile wenigstens eines Polyesters, vorzugsweise C₂-C₁₀-Polyalkylenterephthalat oder Polycarbonat, insbesondere PBT,
B) 0,01 bis 5 Massenanteile wenigstens Cer(III)sulfid (Ce₂S₃) oder Cer(III)sulfid / Lanthan(III)sulfid,
C) 1 bis 150 Massenanteile wenigstens eines Füllstoffs oder Verstärkungsstoffs, vorzugsweise auszuwählen aus der Gruppe Glaskugeln oder Voll- oder Hohlglaskugeln, oder Glasfasern, oder gemahlenes Glas, amorphes Quarzglas, Aluminium-Borsilikatglas mit einem Alkaligehalt 1% (E-Glas), amorphe Kieselsäure, Quarzmehl, Calciumsilicat, Calciummetasilicat, Magnesiumcarbonat, Kaolin, calciniertes Kaolin, Kreide, Kyanit, gepulverter oder gemahlener Quarz, Glimmer, Phlogopit, Bariumsulfat, Feldspat, Wollastonit, Montmorillonit, Pseudoböhmit der Formel AIO(OH), Magnesiumcarbonat und Talkum, insbesondere Glasfasern, und
D) 3 bis 100 Massenanteile wenigstens eines Flammschutzadditivs, vorzugsweise auszuwählen aus mineralischen Flammschutzmitteln, stickstoffhaltigen Flammschutzmitteln oder phosphorhaltigen Flammschutzmitteln,
mit der Maßgabe, dass die Hochvoltkomponenten oder Hochvoltkomponenten für die Elektromobilität im RAL-Farbsystem der Farbnummer RAL2003, RAL2004, RAL2007, RAL2008, RAL2009, RAL2010 oder RAL2011 entsprechen, besonders bevorzugt den Farbnummern RAL2003, RAL2004, RAL2008 oder RAL2009, ganz besonders bevorzugt der Farbnummer RAL 2003.

Erfindungsgemäß bevorzugt sind Hochvoltkomponenten, insbesondere Hochvoltkomponenten für die Elektromobilität, basierend auf Polymerzusammensetzungen enthaltend
A) auf 100 Massenanteile wenigstens eines Polyesters, vorzugsweise C₂-C₁₀-Polyalkylenterephthalat oder Polycarbonat, insbesondere PBT,
B) 0,01 bis 5 Massenanteile wenigstens eines Sulfids enthaltend Cer,
C) 1 bis 150 Massenanteile wenigstens eines Füll- und Verstärkungsstoffs, vorzugsweise auszuwählen aus der Gruppe Glaskugeln oder Voll- oder Hohlglaskugeln, oder Glasfasern, oder gemahlenes Glas, amorphes Quarzglas, Aluminium-Borsilikatglas mit einem Alkaligehalt 1% (E-Glas), amorphe Kieselsäure, Quarzmehl, Calciumsilicat, Calciummetasilicat, Magnesiumcarbonat, Kaolin, calciniertes Kaolin, Kreide, Kyanit, gepulverter oder gemahlener Quarz, Glimmer, Phlogopit, Bariumsulfat, Feldspat, Wollastonit, Montmorillonit, Pseudoböhmit der Formel AIO(OH), Magnesiumcarbonat und Talkum, insbesondere Glasfasern, und
E) 0,01 bis 2 Massenanteile wenigstens eines Thermostabilisators, vorzugsweise auszuwählen aus der Gruppe der sterisch gehinderten Phenole, insbesondere solche enthaltend mindestens eine 2,6 Di-tert.-butylphenyl-Gruppe und/oder 2-tert.-butyl-6-methylphenyl-Gruppe, ferner der Phosphite, der Hypophosphite, insbesondere Natriumhypophosphit NaH₂PO₂ der Hydrochinone, der aromatischen sekundären Amine und der 3,3'-Thiodipropionsäureester,
mit der Maßgabe, dass die Hochvoltkomponenten oder Hochvoltkomponenten für die Elektromobilität im RAL-Farbsystem der Farbnummer RAL2003, RAL2004, RAL2007, RAL2008, RAL2009, RAL2010 oder RAL2011 entsprechen, besonders bevorzugt den Farbnummern RAL2003, RAL2004, RAL2008 oder RAL2009, ganz besonders bevorzugt der Farbnummer RAL 2003. Bevorzugt wird als Komponente E) Titandioxid eingesetzt.

Erfindungsgemäß bevorzugt sind Hochvoltkomponenten, insbesondere Hochvoltkomponenten für die Elektromobilität, basierend auf Polymerzusammensetzungen enthaltend
A) auf 100 Massenanteile wenigstens eines Polyesters, vorzugsweise C₂-C₁₀-Polyalkylenterephthalat oder Polycarbonat, insbesondere PBT,
B) 0,01 bis 5 Massenanteile wenigstens Cer(III)sulfid (Ce₂S₃) oder Cer(III)sulfid / Lanthan(III)sulfid,
C) 1 bis 150 Massenanteile wenigstens eines Füll- und Verstärkungsstoffs, vorzugsweise auszuwählen aus der Gruppe Glaskugeln oder Voll- oder Hohlglaskugeln, oder Glasfasern, oder gemahlenes Glas, amorphes Quarzglas, Aluminium-Borsilikatglas mit einem Alkaligehalt 1% (E-Glas), amorphe Kieselsäure, Quarzmehl, Calciumsilicat, Calciummetasilicat, Magnesiumcarbonat, Kaolin, calciniertes Kaolin, Kreide, Kyanit, gepulverter oder gemahlener Quarz, Glimmer, Phlogopit, Bariumsulfat, Feldspat, Wollastonit, Montmorillonit, Pseudoböhmit der Formel AIO(OH), Magnesiumcarbonat und Talkum, insbesondere Glasfasern, und
E) 0,01 bis 2 Massenanteile wenigstens eines Thermostabilisators, vorzugsweise auszuwählen aus der Gruppe der sterisch gehinderten Phenole, insbesondere solche enthaltend mindestens eine 2,6 Di-tert.-butylphenyl-Gruppe und/oder 2-tert.-butyl-6-methylphenyl-Gruppe, ferner der Phosphite, der Hypophosphite, insbesondere Natriumhypophosphit NaH₂PO₂ der Hydrochinone, der aromatischen sekundären Amine und der 3,3'-Thiodipropionsäureester
mit der Maßgabe, dass die Hochvoltkomponenten oder Hochvoltkomponenten für die Elektromobilität im RAL-Farbsystem der Farbnummer RAL2003, RAL2004, RAL2007, RAL2008, RAL2009, RAL2010 oder RAL2011 entsprechen, besonders bevorzugt den Farbnummern RAL2003, RAL2004, RAL2008 oder RAL2009, ganz besonders bevorzugt der Farbnummer RAL 2003. Bevorzugt wird als Komponente E) Titandioxid eingesetzt.

Erfindungsgemäß bevorzugt sind Hochvoltkomponenten, insbesondere Hochvoltkomponenten für die Elektromobilität, basierend auf Polymerzusammensetzungen enthaltend
A) auf 100 Massenanteile wenigstens eines Polyesters, vorzugsweise C₂-C₁₀-Polyalkylenterephthalat oder Polycarbonat, insbesondere PBT,
B) 0,01 bis 5 Massenanteile wenigstens eines Sulfids enthaltend Cer,
C) 1 bis 150 Massenanteile wenigstens eines Füll- und Verstärkungsstoffs, vorzugsweise auszuwählen aus der Gruppe Glaskugeln oder Voll- oder Hohlglaskugeln, oder Glasfasern, oder gemahlenes Glas, amorphes Quarzglas, Aluminium-Borsilikatglas mit einem Alkaligehalt 1% (E-Glas), amorphe Kieselsäure, Quarzmehl, Calciumsilicat, Calciummetasilicat, Magnesiumcarbonat, Kaolin, calciniertes Kaolin, Kreide, Kyanit, gepulverter oder gemahlener Quarz, Glimmer, Phlogopit, Bariumsulfat, Feldspat, Wollastonit, Montmorillonit, Pseudoböhmit der Formel AIO(OH), Magnesiumcarbonat und Talkum, insbesondere Glasfasern,
D) 3 bis 100 Massenanteile wenigstens eines Flammschutzadditivs, vorzugsweise auszuwählen aus mineralischen Flammschutzmitteln, stickstoffhaltigen Flammschutzmitteln oder phosphorhaltigen Flammschutzmitteln, und
E) 0,01 bis 2 Massenanteile wenigstens eines Thermostabilisators, vorzugsweise auszuwählen aus der Gruppe der sterisch gehinderten Phenole, insbesondere solche enthaltend mindestens eine 2,6 Di-tert.-butylphenyl-Gruppe und/oder 2-tert.-butyl-6-methylphenyl-Gruppe, ferner der Phosphite, der Hypophosphite, insbesondere Natriumhypophosphit NaH₂PO₂ der Hydrochinone, der aromatischen sekundären Amine und der 3,3'-Thiodipropionsäureester,
mit der Maßgabe, dass die Hochvoltkomponenten oder Hochvoltkomponenten für die Elektromobilität im RAL-Farbsystem der Farbnummer RAL2003, RAL2004, RAL2007, RAL2008, RAL2009, RAL2010 oder RAL2011 entsprechen, besonders bevorzugt den Farbnummern RAL2003, RAL2004, RAL2008 oder RAL2009, ganz besonders bevorzugt der Farbnummer RAL 2003. Bevorzugt wird als Komponente E) Titandioxid eingesetzt.

Erfindungsgemäß besonders bevorzugt sind Hochvoltkomponenten, insbesondere Hochvoltkomponenten für die Elektromobilität, basierend auf Polymerzusammensetzungen enthaltend
A) auf 100 Massenanteile wenigstens eines Polyesters, vorzugsweise C₂-C₁₀-Polyalkylenterephthalat oder Polycarbonat, insbesondere PBT,
B) 0,01 bis 5 Massenanteile wenigstens Cer(III)sulfid (Ce₂S₃) oder Cer(III)sulfid / Lanthan(III)sulfid,
C) 1 bis 150 Massenanteile wenigstens eines Füll- und Verstärkungsstoffs, vorzugsweise auszuwählen aus der Gruppe Glaskugeln oder Voll- oder Hohlglaskugeln, oder Glasfasern, oder gemahlenes Glas, amorphes Quarzglas, Aluminium-Borsilikatglas mit einem Alkaligehalt 1% (E-Glas), amorphe Kieselsäure, Quarzmehl, Calciumsilicat, Calciummetasilicat, Magnesiumcarbonat, Kaolin, calciniertes Kaolin, Kreide, Kyanit, gepulverter oder gemahlener Quarz, Glimmer, Phlogopit, Bariumsulfat, Feldspat, Wollastonit, Montmorillonit, Pseudoböhmit der Formel AIO(OH), Magnesiumcarbonat und Talkum, insbesondere Glasfasern,
D) 3 bis 100 Massenanteile wenigstens eines Flammschutzadditivs, vorzugsweise auszuwählen aus mineralischen Flammschutzmitteln, stickstoffhaltigen Flammschutzmitteln oder phosphorhaltigen Flammschutzmitteln, und
E) 0,01 bis 2 Massenanteile wenigstens eines Thermostabilisators, vorzugsweise auszuwählen aus der Gruppe der sterisch gehinderten Phenole, insbesondere solche enthaltend mindestens eine 2,6 Di-tert.-butylphenyl-Gruppe und/oder 2-tert.-butyl-6-methylphenyl-Gruppe, ferner der Phosphite, der Hypophosphite, insbesondere Natriumhypophosphit NaH₂PO₂ der Hydrochinone, der aromatischen sekundären Amine und der 3,3'-Thiodipropionsäureester,
mit der Maßgabe, dass die Hochvoltkomponenten oder Hochvoltkomponenten für die Elektromobilität im RAL-Farbsystem der Farbnummer RAL2003, RAL2004, RAL2007, RAL2008, RAL2009, RAL2010 oder RAL2011 entsprechen, besonders bevorzugt den Farbnummern RAL2003, RAL2004, RAL2008 oder RAL2009, ganz besonders bevorzugt der Farbnummer RAL 2003. Bevorzugt wird als Komponente E) Titandioxid eingesetzt.

### Verfahren

Die vorliegende Erfindung betrifft zudem ein Verfahren zur Herstellung der in den Hochvoltkomponenten, insbesondere in Hochvoltkomponenten für die Elektromobilität, einzusetzenden Polymerzusammensetzungen indem man A) wenigstens einen Polyester, vorzugsweise Polyesters, vorzugsweise C₂-C₁₀-Polyalkylenterephthalat oder Polycarbonat, insbesondere PBT, und B) wenigstens ein Sulfids enthaltend Cer, sowie gegebenenfalls wenigstens eine der weiteren Komponenten C), D) oder E) in wenigstens einem Mischwerkzeug miteinander mischt mit der Maßgabe, dass die Hochvoltkomponenten oder Hochvoltkomponenten für die Elektromobilität im RAL-Farbsystem der Farbnummer RAL2003, RAL2004, RAL2007, RAL2008, RAL2009, RAL2010 oder RAL2011 entsprechen, besonders bevorzugt den Farbnummern RAL2003, RAL2004, RAL2008 oder RAL2009, ganz besonders bevorzugt der Farbnummer RAL 2003. Vorzugsweise werden dabei auf 100 Massenanteile wenigstens eines Polyester 0,01 bis 5 Massenanteile wenigstens eines Sulfids enthaltend Cer eingesetzt. Bevorzugte Sulfide enthaltend Cer sind Cer(III)sulfid (Ce₂S₃) oder Cer(III)sulfid / Lanthan(III)sulfid.

Die vorliegende Erfindung betrifft zudem ein Verfahren zur Herstellung von Hochvoltkomponenten, insbesondere von Hochvoltkomponenten für die Elektromobilität, indem die Polymerzusammensetzungen im Spritzguss, einschließlich der Sonderverfahren GIT (Gasinjektionstechnik), WIT (Wasserinjektionstechnik) und PIT (Projektilinjektionstechnik), in Extrusionsverfahren, einschließlich in der Profil-Extrusion, oder durch Blasformen weiter verarbeitet werden. Gegebenenfalls werden die Polymerzusammensetzungen vor dem Weiterverarbeiten zu Strängen ausgetragen, bis zur Granulierfähigkeit abgekühlt, gegebenenfalls getrocknet und granuliert. In einer Ausführungsform wird die Polymerzusammensetzung als Granulat zwischengelagert.

Vorzugsweise betrifft die Erfindung ein Verfahren zur Herstellung von Hochvoltkomponenten, insbesondere von Hochvoltkomponenten für die Elektromobilität, indem man A) wenigstens einen Polyester, vorzugsweise C₂-C₁₀-Polyalkylenterephthalat oder Polycarbonat, insbesondere PBT, und B) wenigstens ein Sulfid enthaltend Cer, vorzugsweise auf 100 Massenanteile wenigstens eines Polyesters 0,01bis 5 Massenanteile wenigstens eines Sulfids enthaltend Cer miteinander zu Polymerzusammensetzungen mischt, zu Strängen austrägt, bis zur Granulierfähigkeit abkühlt, trocknet und granuliert und die Polymerzusammensetzungen anschließend im Spritzguss, einschließlich der Sonderverfahren GIT (Gasinjektionstechnik), WIT (Wasserinjektionstechnik) und PIT (Projektilinjektionstechnik), in Extrusionsverfahren, einschließlich in der Profil-Extrusion, oder durch Blasformen, weiter verarbeitet mit der Maßgabe, dass die Hochvoltkomponenten oder Hochvoltkomponenten für die Elektromobilität im RAL-Farbsystem der Farbnummer RAL2003, RAL2004, RAL2007, RAL2008, RAL2009, RAL2010 oder RAL2011 entsprechen, besonders bevorzugt den Farbnummern RAL2003, RAL2004, RAL2008 oder RAL2009, ganz besonders bevorzugt der Farbnummer RAL 2003. Bevorzugte Sulfide enthaltend Cer sind Cer(III)sulfid (Ce₂S₃) oder Cer(III)sulfid / Lanthan(III)sulfid.

### Hochvoltkomponenten

Bevorzugte Hochvoltkomponenten, insbesondere Hochvoltkomponenten für die Elektromobilität kommen im elektrischen Antriebsstrang und/oder im Batteriesystem zum Einsatz. Besonders bevorzugte Hochvoltkomponenten sind Abdeckungen für Elektrik oder Elektronik, Steuergeräte, Abdeckungen / Gehäuse für Sicherungen, Relais, Batteriezellenmodule, Sicherungshalter, Sicherungsstecker, Anschlussklemmen, Kabelhalterungen oder Ummantelungen, insbesondere Ummantelungen von Hochvoltstromschienen und Hochvoltstromverteilerschienen (engl. "bus bar").

### Beispiele

Zum Nachweis der erfindungsgemäß beschriebenen Verbesserungen der Eigenschaften wurden zunächst durch Compoundierung entsprechende Polyester basierte Polymerzusammensetzungen angefertigt. Die einzelnen Komponenten wurden hierzu in einem Zweiwellenextruder (ZSK 25 Compounder der Fa. Coperion Werner & Pfleiderer (Stuttgart, Deutschland)) bei Temperaturen zwischen 270 und 300°C gemischt, als Strang ausgetragen, bis zur Granulierbarkeit abgekühlt und granuliert. Nach dem Trocknen (in der Regel zwei Tage bei 80°C im Vakuumtrockenschrank) erfolgte die Verarbeitung des Granulats bei Temperaturen im Bereich von 270 bis 290°C zu Normprüfkörpern für die jeweiligen Prüfungen.

Im Rahmen der vorliegenden Versuche galt als Maß für das **Ausbluten** (Bleeding) die Verfärbung einer Weich-PVC-Folie (W-PVC, FB110 weiß, normal kältefest der Fa. Jedi Kunststofftechnik GmbH, Eitorf, Deutschland) mit den Maßen 30•20•2 mm³, die zwischen 2 Kunststoffplatten mit den Maßen 60•40•2mm³ auf Basis der in Tabelle 2 beschriebenen Zusammensetzungen eingespannt, in einem Heißlufttrockenschrank bei 80°C für 12 Stunden gelagert wurde. Die Bewertung erfolgte danach visuell nach dem Graumaßstab gemäß ISO 105-A02, wobei ,5' bedeutet, dass die PVC-Folie keine Farbänderung zeigte und ,1' bedeutet, dass das PVC-Folie eine starke Farbveränderung zeigte.

Im Rahmen der vorliegenden Erfindung galt als Maß für die **Lichtechtheit** (Lightfastness) die Verfärbung der in Tabelle 2 beschriebenen Formmassen in Form von 60•40•2 mm³-Platten nach UV-Lagerung mit einem UV-Licht (Suntest CPS+, 300-800nm, 45-130 klx, mit Window Glass Filter 250-765 W/m² der Fa. Atlas Material Testing Technology GmbH, Linsengericht, Deutschland) für 96h. Die Bewertung der Verfärbung erfolgte visuell in Anlehnung an den Blaumaßstab (Blue Wool Scale) gemäß DIN EN ISO 105-B02, wobei ,8' für eine hervorragende Lichtechtheit (geringe Farbänderung) und ,1' für sehr geringe Lichtechtheit (starke Farbänderung) steht.

Als Maß für die Qualität der **Laserbeschriftbarkeit** bei 1064nm gilt im Rahmen der vorliegenden Erfindung der Kontrast einer mit einem Laserstrahl behandelten Fläche im Vergleich zu einer nicht mit dem Laserstrahl behandelten Fläche. Hierzu wurde das Laserbeschriftungsgerät DPL-Genesis-Marker(8W) der Firma ACl Laser GmbH, Chemnitz, Deutschland, verwendet, das mit der Beschriftungssoftware MagicMarkV3 und dem Fokussierobjektiv F-Theta 163 ausgestattet war. Als Laser fungierte ein Nd: YAG Laserkristall und lieferte Laserlicht der Wellenlänge 1064nm. Zum Vergleich des Kontrastes nach Beschriftung wurde eine Schreibgeschwindigkeit ("Speed") von 300mm/s, eine Pulsfrequenz ("Frequency") von 8000Hz und ein Zeilenabstand "(Line spacing)" von 100µm gewählt, wobei die Pulsweite ("Pulswidth") 3µs und die Laserleistung ("Power") am Gerät 90% betrug.

Der Kontrast wurde unter Anwendung der Graumaßstabsskala gemäß **ISO 105-A03** wie folgt klassifiziert:
- Klassifizierung ( - ): Die laserbestrahlte Fläche unterschied sich von der nicht laserbestrahlten Fläche vergleichbar einem Graumaßstab nach **ISO 105-A03** der Klasse 3, 3/4, 4, 4/5 oder 5. Die laserbestrahlte Fläche war damit nicht oder nur schlecht von der nicht laserbestrahlten Fläche zu unterscheiden.
- Klassifizierung ( + ): Die laserbestrahlte Fläche unterschied sich von der nicht laserbestrahlten Fläche vergleichbar einem Graumaßstab nach **ISO 105-A03** der Klassen 1 bis 2/3. Die laserbestrahlte Fläche war damit gut von der nicht laserbestrahlten Fläche zu unterscheiden

### Edukte:

Komponente A) Lineares Polybutylenterephthalat (Pocan® B 1300, Handelsprodukt der Lanxess Deutschland GmbH, Köln, Deutschland) mit einer Intrinsischen Viskosität von 93 cm³/g (gemessen in Phenol : 1,2-Dichlorbenzol = 1:1 bei 25°C)
Komponente B1): Cer(III)sulfid/Lanthan(III)sulfid [C.I. Pigment Orange 78 (Neolor Light Orange S der Fa. Baotou Hongbo Te Technology co. Ltd.,'Inner Mongolia' , China)
Komponente X/1): 12H-Phthaloperin-12-on [CAS Nr. 6925-69-5] als Macrolex® Orange 3G von der Firma Lanxess Deutschland GmbH, Köln

**Tab. II**

| | | Bsp. 1 | Vgl. 1 |
|---|---|---|---|
| Komponente A) | Gew.-teile | 100 | 100 |
| Komponente B1) | Gew.-teile | 0,5 | |
| Komponente X/1 | Gew.-teile | | 0,5 |
| Bleeding | GraumaBstab | 5 | 4 |
| Lichtechtheit | Blaumaßstab | 8 | 6 |
| Laserkontrast 1064 nm | Einstufung | + | - |

Die Ergebnisse in **Tab. II** zeigen, dass nur das erfindungsgemäße Bsp. 1 bei gleichzeitig hoher Lichtechtheit und sehr geringer Neigung zum Bleeding auch einen hinreichend guten Kontrast nach Laserbeschriftung mit einem Nd: YAG Laserkristall bei 1064nm zeigte, wohingegen die Farbmittel nach dem Stand der Technik nicht gleichzeitig sowohl einen guten Kontrast, als auch eine gute Lichtechtheit und eine geringe Neigung zum Bleeding aufwiesen.

## Patentansprüche

1. Polymerzusammensetzungen enthaltend wenigstens einen Polyester und wenigstens ein Sulfid enthaltend Cer.

2. Polymerzusammensetzungen gemäß Anspruch 1, **dadurch gekennzeichnet, dass**
A) auf 100 Massenanteile wenigstens eines Polyesters,
B) 0,01 bis 5 Massenanteile wenigstens eines Sulfids enthaltend Cer eingesetzt werden.

3. Polymerzusammensetzungen gemäß Anspruch 1 oder 2, **dadurch gekennzeichnet, dass** wenigstens Cer(III)sulfid oder Cer(III)sulfid / Lanthan(III)sulfid eingesetzt wird.

4. Polymerzusammensetzungen gemäß einem der Ansprüche 1 bis 3, **dadurch gekennzeichnet, dass** als Polyester C₂-C₁₀Polyalkylenterephthalat oder Polycarbonat, insbesondere Polybutylenterephthalat, eingesetzt wird.

5. Polymerzusammensetzungen gemäß einem oder mehreren der Ansprüche 1 bis 4, **dadurch gekennzeichnet, dass** zusätzlich zu den Komponenten A) und B) noch C) wenigstens ein Füllstoff oder Verstärkungsstoff, bevorzugt zu 1 bis 150 Massenanteilen, bezogen auf 100 Massenanteile der Komponente A) eingesetzt wird, mit der Maßgabe, dass die Polymerzusammensetzungen im RAL-Farbsystem der Farbnummer RAL2003, RAL2004, RAL2007, RAL2008, RAL2009, RAL2010 oder RAL2011 entsprechen.

6. Polymerzusammensetzungen gemäß Anspruch 5, **dadurch gekennzeichnet, dass** zusätzlich zu den Komponenten A), B) und C) oder anstelle von C) noch D) wenigstens ein Flammschutzmittel, bevorzugt zu 3 bis 100 Massenanteilen, bezogen auf 100 Massenanteile der Komponente A) eingesetzt wird, mit der Maßgabe, dass die Polymerzusammensetzungen im RAL-Farbsystem der Farbnummer RAL2003, RAL2004, RAL2007, RAL2008, RAL2009, RAL2010 oder RAL2011 entsprechen.

7. Polymerzusammensetzungen gemäß Anspruch 6, **dadurch gekennzeichnet, dass** zusätzlich zu den Komponenten A), B), C) und D) oder anstelle von C) und/oder D) noch E) wenigstens ein weiteres von den Komponenten B), C) und D) verschiedenes Additiv, bevorzugt zu 0,01 bis 80 Massenanteile, bezogen auf 100 Massenanteile der Komponente A) eingesetzt wird, mit der Maßgabe, dass die Polymerzusammensetzungen im RAL-Farbsystem der Farbnummer RAL2003, RAL2004, RAL2007, RAL2008, RAL2009, RAL2010 oder RAL2011 entsprechen,.

8. Polymerzusammensetzungen gemäß einem oder mehreren der Ansprüche 5 bis 7, **dadurch gekennzeichnet, dass** der Füllstoff oder Verstärkungsstoff auszuwählen ist aus der Gruppe Glaskugeln oder Voll- oder Hohlglaskugeln, oder Glasfasern, gemahlenes Glas, amorphes Quarzglas, Aluminium-Borsilikatglas mit einem Alkaligehalt 1%, amorphe Kieselsäure, Quarzmehl, Calciumsilicat, Calciummetasilicat, Magnesiumcarbonat, Kaolin, calciniertes Kaolin, Kreide, Kyanit, gepulverter oder gemahlener Quarz, Glimmer, Phlogopit, Bariumsulfat, Feldspat, Wollastonit, Montmorillonit, Pseudoböhmit der Formel AIO(OH), Magnesiumcarbonat und Talkum, insbesondere Glasfasern.

9. Polymerzusammensetzungen gemäß einem oder mehreren der Ansprüche 6 bis 8, **dadurch gekennzeichnet, dass** das Flammschutzmittel auszuwählen ist aus mineralischen Flammschutzmitteln, stickstoffhaltigen Flammschutzmitteln oder phosphorhaltigen Flammschutzmitteln.

10. Polymerzusammensetzungen gemäß einem oder mehreren der Ansprüche 7 bis 9, **dadurch gekennzeichnet, dass** als Additiv E) wenigstens ein Thermostabilisator eingesetzt wird, vorzugsweise auszuwählen aus der Gruppe der sterisch gehinderten Phenole, insbesondere solche enthaltend mindestens eine 2,6 Di-tert.-butylphenylgruppe und/oder 2-tert.-Butyl-6-methylphenyl-Gruppe, ferner der Phosphite, der Hypophosphite, insbesondere Natriumhypophosphit NaH₂PO₂ der Hydrochinone, der aromatischen sekundären Amine und der 3,3'-Thiodipropionsäureester.

11. Hochvoltkomponenten, insbesondere Hochvoltkomponenten für die Elektromobilität, basierend auf Polymerzusammensetzungen gemäß einem oder mehreren der Ansprüche 1 bis 10.

12. Hochvoltkomponenten gemäß Anspruch 11, **dadurch gekennzeichnet, dass** es sich dabei um Abdeckungen für Elektrik oder Elektronik, Steuergeräte, Abdeckungen / Gehäuse für Sicherungen, Relais, Batteriezellenmodule, Sicherungshalter, Sicherungsstecker, Anschlussklemmen, Kabelhalterungen oder Ummantelungen, insbesondere Ummantelungen von Hochvoltstromschienen und Hochvoltstromverteilerschienen, handelt.

13. Verwendung von wenigstens einem Sulfid enthaltend Cer zur Herstellung Polyester basierter Polymerzusammensetzungen und / oder zur Markierung Polyester basierter Erzeugnisse als Hochvoltkomponenten, bevorzugt von Polyester basierten Hochvoltkomponenten für die Elektromobilität, mittels Laser.

14. Verfahren zur Herstellung von Hochvoltkomponenten, insbesondere von Hochvoltkomponenten für die Elektromobilität, **dadurch gekennzeichnet, dass** man A) wenigstens einen Polyester und B) wenigstens ein Sulfid enthaltend Cer, vorzugsweise in Mengen von 0,01 bis 5 Massenanteile Sulfid enthaltend Cer auf 100 Massenanteile Polyester, miteinander zu Polymerzusammensetzungen mischt, zu Strängen austrägt, bis zur Granulierfähigkeit abkühlt, trocknet und granuliert und die Polymerzusammensetzungen anschließend im Spritzguss, einschließlich der Sonderverfahren Gasinjektionstechnik, Wasserinjektionstechnik und Projektilinjektionstechnik, in Extrusionsverfahren, einschließlich in der Profil-Extrusion, oder durch Blasformen, weiter verarbeitet.

15. Verwendung gemäß Anspruch 13 oder Verfahren gemäß Anspruch 14, **dadurch gekennzeichnet, dass** als Polyester C₂-C₁₀Polyalkylenterephthalat oder Polycarbonat, insbesondere Polybutylenterephthalat, eingesetzt wird.
